(19) Europäisches Patentamt
European Patent Office
Office européen des brevets

(11) EP 4 354 769 A1

(12) EUROPEAN PATENT APPLICATION
published in accordance with Art. 153(4) EPC

(43) Date of publication:
17.04.2024 Bulletin 2024/16

(51) International Patent Classification (IPC):
H04L 1/00 (2006.01)

(21) Application number: 22819667.1

(52) Cooperative Patent Classification (CPC):
H04L 1/00

(22) Date of filing: 13.06.2022

(86) International application number:
PCT/CN2022/098468

(87) International publication number:
WO 2022/258071 (15.12.2022 Gazette 2022/50)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 11.06.2021 CN 202110653906

(71) Applicant: Huawei Technologies Co., Ltd.
Shenzhen, Guangdong 518129 (CN)

(72) Inventors:
• ZHU, Huiying
  Shenzhen, Guangdong 518129 (CN)
• DONG, Pengpeng
  Shenzhen, Guangdong 518129 (CN)
• TAN, Zhiyuan
  Shenzhen, Guangdong 518129 (CN)

(74) Representative: Huawei European IPR
Huawei Technologies Duesseldorf GmbH
Riesstraße 25
80992 München (DE)

(54) **COMMUNICATION METHOD, APPARATUS, AND READABLE STORAGE MEDIUM**

(57) A communication method and apparatus, and a readable storage medium are provided. A network coding NC parameter corresponding to a received index is determined based on a correspondence between the index and an NC parameter, and the NC parameter is applied to NC processing. According to this application, NC processing can adapt to a channel quality state, so that transmission reliability can be ensured and spectrum utilization efficiency can be improved. This application may be applied to an extended reality XR service, a scenario with a low latency and/or a scenario with a large uplink capacity.

```
Transmit end                                      Receive end

        S610: First information having a first correspondence
              with first NC code rate information

S630: The transmit end determines the first NC code rate
   information based on the first information and the first
                      correspondence

        S650: Second information (fast feedback/indication)

S670: Perform NC processing on to-be-sent data based on
second NC code rate information to obtain coded packets
```

FIG. 6

**Description**

**TECHNICAL FIELD**

This application relates to communication technologies, and in particular, to a communication method and apparatus, and a readable storage medium.

**BACKGROUND**

A network coding (network coding, NC) technology is a method in which several data packets of a same size are coded to obtain coded data packets, and sufficient coded data packets are decoded to recover original data packets. Because the coded data packets integrate information about multiple original data packets, a receive end may recover the original data packets by using the coded data packets. This technology is a method that can be used to effectively improve transmission performance of a wireless communication system.

In an existing communication system, feedback retransmission implements effective error control. For example, a hybrid automatic repeat request (hybrid automatic repeat request, HARQ) mechanism at a medium access control (medium access control, MAC) layer and an automatic repeat request retransmission mechanism at a radio link control (radio link control, RLC) layer jointly ensure transmission reliability. However, with evolution and development of communication technologies, a new radio access technology (new radio access technology, NR) imposes higher requirements on system reliability, effectiveness, and the like, and the feedback retransmission mechanism also is confronted with many challenges, for example, high overheads and performance losses caused by frequent feedback in a multicast or broadcast scenario. The network coding technology is a forward error correction (forward error correction, FEC) technology in which an original data packet is coded and redundancy is added in advance to prevent packet losses or performance losses in wireless transmission, thereby reducing feedback overheads. Therefore, network coding provides a different solution for the new radio access technology to ensure transmission reliability.

However, currently, there is no solution about how to determine a related parameter such as an NC code rate in a network coding process.

Therefore, a solution for determining a related parameter in the network coding process is urgently needed to support application of the network coding technology.

**SUMMARY**

Embodiments of this application provide a communication method and a related apparatus, to determine a related parameter (an NC parameter for short) such as code rate information in a network coding process, to support specific application of a network coding technology.

The following describes this application from different aspects. It should be understood that mutual reference may be made between the following implementations and advantageous effects of the different aspects.

According to a first aspect, this application provides a communication method specifically for determining an NC parameter of downlink data. A transmit end of the downlink data is referred to as a transmit end, and a receive end of the downlink data is referred to as a receive end. The method may be performed by a terminal or an access network device, or may be performed by a component (for example, a processor, a chip, or a chip system) of a terminal or an access network device.

In this application, for data transmission between a receive end and a transmit end, downlink data is data transmitted by a controlling party to a controlled party, and uplink data is data transmitted by the controlled party to the controlling party. For example, for data communication between the access network device and the terminal, if the access network device is in a controlling state and the terminal is in a controlled state, data transmitted by the access network device to the terminal is downlink data, and data transmitted by the terminal to the access network device is uplink data. For another example, for data communication between a terminal 1 and a terminal 2, if the terminal 1 is in a controlling state and the terminal 2 is in a controlled state, data transmitted by the terminal 1 to the terminal 2 is downlink data, and data transmitted by the terminal 2 to the terminal 1 is uplink data.

The method may include the following.

A transmit end receives first feedback information from a receive end, where the first feedback information indicates a channel quality state of a higher layer, the higher layer is higher than a physical layer, there is a first correspondence between the first feedback information and first NC parameter information, the higher layer has a network coding function, and the first NC parameter information includes one or more of the following: first downlink NC code rate information, size information of a first downlink network coding packet, information about a coding depth, a convolution depth, a sliding window size of first downlink network coding, or size information of a first downlink finite field.

The transmit end determines the first NC parameter information based on the first feedback information and the first correspondence, where the first downlink NC parameter information is used by the higher layer to perform NC processing on to-be-sent downlink data.

The first downlink NC code rate information is used to determine a quantity of coded packets generated by performing network coding processing on the to-be-sent downlink data by the higher layer, where the coded packets include a redundant packet and a system packet corresponding to an original data packet for generating the redundant packet; or the first downlink NC code rate information is used to determine a quantity of redundant packets generated by performing network coding processing on the to-be-sent downlink data by the higher layer.

The size information of the first downlink network coding packet is used to determine a quantity of original data packets on which NC processing is performed when the higher layer performs network coding processing of a block code type on the to-be-sent downlink data. In this embodiment of this application, the term "network coding packet" may also be referred to as a "network coding block", a "coding packet", or a "coding block".

The information about the coding depth, the convolution depth, or the sliding window size of first downlink network coding is used to determine a quantity of original data packets on which NC processing is performed when the higher layer performs network coding processing of a convolution type on the to-be-sent downlink data. The coding depth, the convolution depth, or the sliding window may be replaced with each other. The coding depth may also be referred to as a coding length, a coding block size, a coding window size, or the like.

The size information of the first downlink finite field is used to determine a quantity of elements included in the finite field when the higher layer performs network coding processing on the to-be-sent downlink data. It may be understood that, in this application, "information A" is information that identifies A or A itself, and implementations of the two may be different. Without special description, in this application, when A is mentioned in a message, a solution intended to cover information A, that is, the information A may be referred to as A for short during description.

Optionally, the method may further include:
performing NC processing on the to-be-sent downlink data based on the first NC parameter information, and sending a data packet obtained through NC processing.

Correspondingly, according to a second aspect, this application provides a communication method specifically used to determine an NC parameter of downlink data. The method may be performed by a terminal or an access network device, or may be performed by a component (for example, a processor, a chip, or a chip system) of a terminal or an access network device.

The method includes the following.

A receive end determines first feedback information, where the first feedback information indicates a channel quality state of a higher layer, the higher layer is higher than a physical layer, and the higher layer has a network coding function.

The receive end sends the first feedback information to a transmit end, where the first feedback information is used to determine first downlink NC parameter information of the transmit end, there is a first correspondence between the first feedback information and the first downlink NC parameter information, the first downlink NC parameter information is used by the higher layer of the transmit end to perform network coding processing on to-be-sent downlink data, and the first NC parameter information includes one or more of the following: first downlink NC code rate information, size information of a first network coding packet, information about a coding depth, a convolution depth, a sliding window size of first network coding, or size information of a first finite field.

The network coding function in this application includes performing network coding on an original data packet and adding a packet header of a coded packet. Network coding may be implemented by using an encoder. Input of the encoder is K original data packets, and output of the encoder is N coded data packets (referred to as coded packets for short), where both N and K are positive integers, and N is greater than K. The coded packets include (N-K) redundant packets and K system packets, or the coded packets include N redundant packets (that is, the coded packets include no system packet). A coding coefficient of the system packet is a unit vector, to be specific, content of the system packet is the same as content of the original data packet. A coding coefficient of the redundant packet is a non-unit vector. Through association between content of the redundant packet and content of an original data packet for generating the redundant packet, the receive end may decode the redundant packet together with a successfully received original data packet or system packet, to recover an unsuccessfully received original data packet. Based on the feature of network coding, the original data packets have a same size. Further, the network coding function may include a process of performing processing on an original data unit, for example, a service data unit (service data unit, SDU) or a protocol data unit (protocol data unit, PDU), to obtain original data packets of a same size. The processing may include one or more of segmentation, concatenation, or padding (padding). The network coding function of the transmit end corresponds to the network decoding function of the receive end. The receive end may recover K original data packets by decoding at least K successfully received coded packets together. A protocol layer having the network coding function or a decoding function corresponding to network coding is referred to as a network coding/decoding layer. In this application, the network coding/decoding layer is referred to as a network coding layer for short, that is, the higher layer having the network coding function or the decoding function corresponding to network coding is referred to as a network coding layer. The network coding function or the decoding function corresponding to network coding may be referred to as a network coding and decoding function for short.

The network coding layer may be a protocol layer such as a radio resource control (radio resource control, RRC) layer, a packet data convergence protocol (packet data convergence protocol, PDCP) layer, a backhaul adaptation protocol (backhaul adaptation protocol, BAP) layer, a radio link control (radio link control, RLC) layer, a medium access control (medium access control, MAC) layer, or a physical layer (physical layer, PHY). The network coding layer may alternatively be a new protocol layer other than the MAC layer, the RLC layer, the BAP layer, and the PDCP layer. A network coding layer may be added above the PDCP layer, a network coding layer may be added above the BAP layer, a network coding layer may be added between the PDCP layer and the RLC layer, a network coding layer may be added between the RLC layer and the MAC layer, or a network coding layer may be added between the MAC layer and the PHY layer. In this application, the network coding layer is higher than the physical layer.

A code pattern of network coding may include one or more of the following: random linear network coding (random linear network coding, RLNC), convolutional network coding (convolutional network coding, CNC), deterministic linear network coding, a batched sparse code (batched sparse code, BATS), an erasure code (erasure code), a fountain code (fountain code), a streaming code (streaming code), a maximum distance separable (maximum distance separable, MDS) code, an LT (luby transform) code, a rateless code, an RS (reed-solomon) code, or the like, and may further include another code pattern. This is not limited herein.

Based on the method provided in the first aspect or the second aspect, the transmit end determines, based on channel quality state information that is of the network coding layer and that is fed back by the receive end and a correspondence between downlink code rate information and a channel quality state of the network coding layer, a network coding parameter such as an NC error rate used for the downlink data, so that the network coding parameter of the downlink data can adapt to the channel quality state, thereby balancing complexity of coding and decoding at the transmit/receive end and system spectral efficiency while ensuring system transmission reliability.

Further, when channel quality is good, the first feedback information reported by the receive end may indicate that current channel quality of the network coding layer is in a good state or indicate that the current channel quality of the network coding layer is at a high level, and the transmit end may select a large code rate based on the first feedback information, to avoid a waste of radio resources caused by excessive redundant packets, thereby improving system spectral efficiency. When the channel quality deteriorates, the first feedback information reported by the receive end may indicate that the current channel quality of the network coding layer is in a poor state or indicate that the current channel quality of the network coding layer is at a low level, and the transmit end may select a small code rate based on the first feedback information, to improve an error correction capability of the receive end, avoid a failure in decoding, by the receive end, a data packet undergoing network coding, thereby improving system spectral efficiency.

When a channel quality state is good, a small network coding packet, convolution depth, sliding window size, or finite field size may be selected, so that system transmission reliability can be ensured and complexity of coding and decoding at the transmit/receive end can be reduced. When the channel quality state is poor, a large network coding packet, convolution depth, sliding window size, or finite field size may be selected, so that an error correction capability of network coding can be improved, system transmission reliability can be ensured, thereby improving system spectral efficiency. Coding and decoding are coding and decoding or coding/decoding, and the three may be replaced with each other.

With reference to the first aspect or the second aspect, in a first possible implementation, the first feedback information is related to a first measurement result.

The first measurement result includes one or more of the following:

a decoding state of the receive end that corresponds to network coding, where the decoding state indicates a success rate and/or a failure rate of decoding corresponding to a network coding packet or a network coding sliding window in a period of time, and if all original data packets in the network coding packet or the network coding sliding window are successfully decoded, the network coding packet or the network coding sliding window is successfully decoded; or if not all original data packets in the network coding packet or the network coding sliding window are successfully decoded, the network coding packet or the network coding sliding window fails to be decoded; the success rate is a proportion of network coding packets that are successfully decoded in a period of time to all network coding packets, or a proportion of network coding sliding windows that are successfully decoded in a period of time to all network coding sliding windows; and the failure rate is a proportion of network coding packets that fail to be decoded in a period of time to all network coding packets, or a proportion of network coding sliding windows that fail to be decoded in a period of time to all network coding sliding windows;

a packet loss rate of the higher layer, where the packet loss rate of the higher layer indicates a ratio of a quantity of data packets at the higher layer that are unsuccessfully received in a period of time to a total quantity of data packets at the higher layer, or indicates a ratio of a quantity of original data packets at the higher layer that are unsuccessfully received in a period of time to a total quantity of original data packets at the higher layer;

a frame loss rate of the higher layer, where the frame loss rate of the higher layer indicates a ratio of a quantity of video frames that are unsuccessfully decoded at the higher layer in a period of time to a total quantity of video frames; or
channel state information of the physical layer.

The channel state information of the physical layer may include one or more of a CQI, an SINR, RSRP, an RSSI, RSRQ, or the like.

As described above, the first feedback information indicates the channel quality state of the higher layer. Because the channel quality state of the higher layer is related to the channel state information of the physical layer, the corresponding first feedback information may be obtained based on the measured channel state information of the physical layer. Based on measurement information of the physical layer, channel quality of the network coding layer can be calculated while measurement overheads are reduced, thereby accurately adjusting a code rate. An accurate channel quality state of the network coding layer may be obtained based on a statistical measurement result of a parameter that can reflect a channel quality state at the network coding layer, such as a decoding state of network coding, the packet loss rate of the network coding layer, or the frame loss rate of the network coding layer, thereby accurately adjusting a code rate.

It may be understood that, the higher layer is a protocol layer embedded with network coding or a decoding function corresponding to network coding. For example, when the higher layer is a PDCP layer having a network coding function, that the packet loss rate of the higher layer indicates a ratio of a quantity of data packets at the higher layer that are unsuccessfully received in a period of time to a total quantity of data packets at the higher layer may include: The packet loss rate of the higher layer indicates a ratio of a quantity of PDUs that are unsuccessfully received in a period of time to a total quantity of PDUs at the higher layer, where the data packet at the higher layer is the PDU, and may be specifically a PDU transmitted from the higher layer to a lower layer; or packet loss rate of the higher layer indicates a ratio of a quantity of SDUs that are unsuccessfully received in a period of time to a total quantity of SDUs at the higher layer, where the data packet at the higher layer is the SDU, and may be specifically an SDU received by the higher layer from an upper layer.

With reference to the first aspect, the second aspect, or the first possible implementation, in a second possible implementation, the first feedback information is further related to a reliability indicator of a service, where the reliability indicator of the service may include one or more of the following: a quality of service (QoS) requirement of the service;

a mean opinion score (MOS);
a target packet loss rate of the higher layer; or
a target frame loss rate of the higher layer.

The reliability indicator of the service is used as a basis for determining the first feedback information, so that channel quality levels can be adaptively divided for different service features, so as to adaptively adjust NC parameter information of a corresponding service, thereby improving system spectral efficiency. It may be understood that the reliability indicator of the service may further include another indicator, and details are not described herein.

With reference to the first aspect, the second aspect, or the first or the second possible implementation, in a third possible implementation, the first downlink NC code rate information indicates one or more of the following:

a ratio of a quantity of original data packets to a quantity of redundant packets corresponding to the original data packets;
a ratio of a quantity of original data packets to a total quantity of data packets, where the total quantity of data packets is a sum of the quantity of original data packets and a quantity of redundant packets corresponding to the original data packet;
a ratio of a quantity of redundant packets to a total quantity of data packets, where the total quantity of data packets is a sum of a quantity of corresponding original data packets for generating the redundant packets and the quantity of redundant packets;
a ratio of a quantity of original data packets newly participating in coding in a current coding window to a quantity of redundant packets corresponding to the current coding window;
a ratio of a quantity of original data packets newly participating in coding in a current coding window to a total quantity of data packets corresponding to the current coding window, where the total quantity of data packets corresponding to the current coding window is a sum of a quantity of original data packets and a quantity of redundant packets in the current coding window, or the total quantity of data packets corresponding to the current coding window is a sum of the quantity of original data packets newly participating in coding and the quantity of redundant packets in the current coding window; or
a ratio of a quantity of redundant packets in a current coding window to a total quantity of data packets corresponding to the current coding window, where the total quantity of data packets corresponding to the current coding window is a sum of a quantity of original data packets and the quantity of redundant packets in the current coding window, or the total quantity of data packets corresponding to the current coding window is a sum of a quantity of original data packets newly participating in coding and the quantity of redundant packets in the current coding window.

The ratio of the quantity of original data packets to the total quantity of data packets or the ratio of the quantity of original data packets newly participating in coding in the current coding window to the total quantity of data packets corresponding to the current coding window is common definition of an NC code rate. In this application, the NC code rate may include one or more of the foregoing ratios indicated by the first downlink NC code rate information.

The first downlink NC code rate information indicates a code rate-related value, so that the transmit end can determine a quantity of coded packets or redundant packets generated by performing network coding processing on the to-be-sent downlink data.

With reference to any one of the first aspect, the second aspect, or the first to the third possible implementations, in a fourth possible implementation, the first correspondence is one of a plurality of correspondences, the first feedback information is one of a plurality of indexes, the first downlink NC parameter information is one of a plurality of pieces of downlink NC parameter information, there are the plurality of correspondences between the plurality of indexes and the plurality of pieces of first downlink NC parameter information, one of the plurality of indexes corresponds to one or more of pieces of first downlink NC parameter information, and one of the plurality of pieces of downlink NC parameter information includes one or more pieces of parameter information related to downlink NC.

Specifically, that the first downlink NC parameter information is the first downlink NC code rate information is used as an example.

The first downlink NC code rate information is one of the plurality of pieces of downlink NC code rate information, there are the plurality of correspondences between the plurality of indexes and the plurality of pieces of downlink NC code rate information, one of the plurality of indexes corresponds to one or more of the plurality of pieces of downlink NC code rate information, and one of the plurality of pieces of downlink NC code rate information includes one or more parameters related to a downlink NC code rate.

The plurality of indexes may correspond to a plurality of channel quality levels, and there may be a correspondence between each channel quality level and one downlink NC parameter.

In this application, a specific correspondence may be predefined. For example, the correspondence is pre-stored at the transmit end and the receive end in a form of a table or a character string. The pre-stored correspondence may be pre-determined in a protocol, or the correspondence may be pre-configured by the transmit end for the receive end.

"Predefine" in this application may be understood as "define", "define in advance", "store", "pre-store", "pre-negotiate", "pre-configure", "solidify", or "pre-burn".

In this way, the receive end may report one of the plurality of channel quality levels, that is, one of the plurality of indexes, based on a currently measured channel quality state of the network coding layer, and the transmit end may determine, based on a correspondence between the channel quality level and the downlink NC parameter, a network coding parameter that may be used for downlink data. Therefore, feedback overheads required by the first feedback information are small, and system spectral efficiency of can be improved.

With reference to any one of the first aspect, the second aspect, or the first to the fourth possible implementations, in a fifth possible implementation, the first feedback information is control information of the higher layer.

The first feedback information is carried by using control information of the network coding layer, for example, a control PDU, so that transmission reliability of the first feedback information can be ensured.

With reference to any one of the first aspect, the second aspect, or the first to the fourth possible implementations, in a sixth possible implementation, the first feedback information is control information of the physical layer.

The first feedback information is carried by using the control message of the physical layer, so that transmission reliability of the first feedback information can be ensured, and a transmission delay of the first feedback information can be short.

With reference to the sixth possible implementation of the first aspect or the second aspect, in a seventh possible implementation, the first feedback information further indicates one or more of first downlink modulation scheme information or first downlink physical-layer code rate information of the physical layer, the first downlink modulation scheme information is used by the physical layer to determine a modulation scheme of the to-be-sent downlink data, and the first downlink physical-layer code rate information is used by the physical layer to determine a physical-layer code rate of the to-be-sent downlink data.

The first feedback information is used to determine both a code rate of the network coding layer and an MCS of the physical layer, that is, a modulation scheme and/or a physical-layer code rate, so that joint control can be adaptively performed on a network coding code rate and a physical-layer rate based on a channel condition, thereby reducing feedback overheads, and further improving system spectral efficiency while ensuring data transmission reliability.

With reference to the sixth or the seventh possible implementation of the first aspect or the second aspect, in an eighth possible implementation, the first feedback information is further related to a physical-layer reliability indicator of a service at the physical layer, for example, related to a target block error rate TBLER.

The physical-layer reliability indicator of the service is used as a basis for determining the first feedback information, so that physical-layer channel quality levels can be adaptively divided for different service features, so as to adaptively adjust an MCS of a corresponding service, thereby improving system spectral efficiency.

With reference to any one of the first aspect or the first to the eighth possible implementations of the first aspect, in a ninth possible implementation, the method may further include the following.

The transmit end receives second feedback information from the receive end, where the second feedback information indicates one or more of the following: a quantity of coded packets that are further required by the receive end for correct decoding, a quantity of coded packets that are correctly received by the receive end, or a success or a failure of decoding performed by the receive end corresponding to network coding.

The transmit end adjusts the first downlink NC code rate information based on the second feedback information to determine second downlink NC code rate information, where the second downlink NC code rate information is used to determine a quantity of coded packets or redundant packets generated by performing the network coding processing on the to-be-sent downlink data by the higher layer.

Correspondingly, with reference to any one of the second aspect or the first to the eighth possible implementations of the second aspect, in a tenth possible implementation, the method may further include the following.

The receive end sends second feedback information to the transmit end, where the second feedback information indicates one or more of the following: a quantity of coded packets further required for correct decoding, a quantity of correctly received coded packets, or a success or a failure of decoding corresponding to network coding, the second feedback information is used to adjust the first downlink NC parameter information to determine the second downlink NC parameter information, and the second downlink NC parameter information is used by the higher layer to perform the network coding processing on the to-be-sent downlink data.

The second feedback information is used, where the second feedback information is specific to a currently decoded coded packet, so that a feedback interval of the second feedback information may be shorter and timelier. Therefore, the first downlink NC parameter information, for example, the first downlink NC code rate information, determined based on the first feedback information can be adjusted more finely, so as to determine more accurate downlink NC parameter information, thereby further improving system spectral efficiency.

With reference to the ninth possible implementation or the tenth possible implementation, in an eleventh possible implementation, the second feedback information is the control information of the higher layer.

The second feedback information is carried by using control information of the network coding layer, for example, a control PDU, so that transmission reliability of the second feedback information can be ensured.

With reference to the ninth possible implementation or the tenth possible implementation, in a twelfth possible implementation, the second feedback information is the control information of the physical layer.

The second feedback information is carried by using the control message of the physical layer, so that transmission reliability of the second feedback information can be ensured, and a transmission delay of the second feedback information can be short.

The foregoing first aspect or second aspect is specific to determining of network coding code rate information of downlink data. The following third aspect or fourth aspect is specific to determining of network coding code rate information of uplink data.

According to a third aspect, this application provides a communication method, specifically used to determine network coding parameter information of uplink data. A transmit end of the uplink data is referred to as a transmit end, and a receive end of the uplink data is referred to as a receive end. The method may be performed by a terminal or an access network device, or may be performed by a component (for example, a processor, a chip, or a chip system) of a terminal or an access network device.

The method may include the following.

A receive end determines first indication information, where the first indication information indicates first uplink NC parameter information used when a higher layer of a transmit end performs network coding processing on to-be-sent uplink data of the transmit end, the first uplink NC parameter information is used for the network coding processing, there is a second correspondence between the first indication information and the first uplink NC parameter information, and the higher layer is higher than a physical layer and has a network coding function.

The receive end sends the first indication information to the transmit end. Correspondingly, according to a fourth aspect, this application provides a communication method, specifically used to determine network coding parameter information of uplink data. The method may be performed by a terminal or an access network device, or may be performed by a component (for example, a processor, a chip, or a chip system) of a terminal or an access network device.

The method may include the following.

A transmit end receives first indication information, where the first indication information indicates first uplink NC parameter information used when a higher layer performs network coding processing on to-be-sent uplink data, the first uplink NC parameter information is used for the network coding processing, there is a second correspondence between the first indication information and the first uplink NC parameter information, and the higher layer is higher than a physical layer and has a network coding function.

The transmit end determines the first uplink NC parameter information based on the first indication information and the second correspondence.

In the third aspect or the fourth aspect, the first uplink NC parameter information includes one or more of the following: first uplink NC code rate information, size information of a first uplink network coding packet, information about a coding depth, a convolution depth, or a sliding window size of first uplink network coding, or size information of a first uplink finite field.

The first uplink NC code rate information is used to determine a quantity of coded packets or redundant packets generated by performing network coding processing on the to-be-sent uplink data by the higher layer, and the coded packets include a redundant packet and a system packet corresponding to an original data packet for generating the redundant packet.

The size information of the first uplink network coding packet is used to determine a quantity of original data packets on which NC processing is performed when the higher layer performs network coding processing of a block code type on the to-be-sent uplink data. In this embodiment of this application, the term "network coding packet" may also be referred to as a "network coding block", a "coding packet", or a "coding block".

The information about the coding depth, the convolution depth, or the sliding window size of first uplink network coding is used to determine a quantity of original data packets on which NC processing is performed when the higher layer performs network coding processing of a convolution type on the to-be-sent uplink data. The coding depth, the convolution depth, or the sliding window may be replaced with each other. The coding depth may also be referred to as a coding length, a coding block size, a coding window size, or the like.

The size information of the first uplink finite field is used to determine a quantity of elements included in the finite field when the higher layer performs network coding processing on the to-be-sent uplink data.

Descriptions related to network coding are the same as those in the first aspect or the second aspect, and details are not described herein again.

Based on the method provided in the first aspect or the second aspect, the receive end of the uplink data determines expected uplink NC parameter information, that is, target uplink NC parameter information, and sends the first indication information corresponding to the expected uplink NC parameter information to the transmit end of the uplink data. Correspondingly, the transmit end of the uplink data receives the first indication information, and determines the first uplink NC parameter information based on the correspondence between the first indication information and the first uplink NC parameter information. In this way, the first uplink NC parameter information of the uplink data can meet an expectation of the receive end of the uplink data, and the expectation may be more adaptive to an uplink channel quality state, thereby improving system spectral efficiency.

It can be learned that, a difference between determining of NC parameter information of the uplink data, that is, the uplink NC parameter information, and determining of NC parameter information of the downlink data, that is, the downlink NC parameter information, lies in the following.

Because a control party of data transmission is the transmit end of the downlink data and the receive end of the uplink data, network coding parameter information, for example, NC code rate information, is determined by the control party of data transmission regardless of whether the downlink data is transmitted or the uplink data is transmitted. Physical meanings indicated by the first feedback information and the first indication information are different. For transmission of the downlink data, the first feedback information sent by the receive end to the transmit end indicates the channel quality state of the higher layer. For example, the first feedback information is a level index of the channel quality state of the higher layer. The transmit end determines, based on the first feedback information, the channel quality state of the higher layer, to determine network coding parameter information of the downlink data, for example, code rate information. In other words, the network coding parameter information finally used by the downlink data, for example, the code rate information, may be determined based on the first downlink NC parameter information corresponding to the first feedback information. For example, the first downlink NC parameter information is the first downlink NC code rate information. The first downlink NC code rate information may be equal to the first downlink NC code rate information corresponding to the first feedback information, or may be unequal to the first downlink NC code rate information corresponding to the first feedback information. For transmission of the uplink data, the first indication information sent by the receive end to the transmit end indicates the first uplink NC parameter information used when the higher layer of the transmit end performs network coding processing on the to-be-sent uplink data of the transmit end. For example, the first indication information is an index of the first uplink NC code rate information.

In other aspects, determining of the NC parameter information of the uplink data is similar to determining of the NC parameter information of the downlink data. Therefore, for descriptions of concepts and effect related to determining of the NC parameter information of the uplink data, refer to descriptions of similar concepts and effect in determining of the NC parameter information of the downlink data. Details are not described again.

In other words, the first to the twelfth possible implementations of the first aspect or the second aspect all may be applied to the third aspect or the fourth aspect when the first feedback information is replaced with the first indication information, the second feedback information is replaced with second indication information, and downlink is replaced with uplink. It may be understood that the uplink solution and the downlink solution may be independent of each other. The first correspondence, the first measurement result, the plurality of correspondences, and parameters related to the first feedback information and the second feedback information in the downlink solution may have different designs and values in the uplink solution.

For example, optionally, the first indication information is related to a second measurement result.

The second measurement result includes one or more of the following:

a decoding state corresponding to network coding, where the decoding state indicates a success rate and/or a failure rate of decoding corresponding to network coding in a period of time;
a packet loss rate of the higher layer, where the packet loss rate of the higher layer indicates a ratio of a quantity of data packets at the higher layer that are unsuccessfully received in a period of time to a total quantity of data packets at the higher layer, or indicates a ratio of a quantity of original data packets at the higher layer that are unsuccessfully received in a period of time to a total quantity of original data packets at the higher layer;
a frame loss rate of the higher layer, where the frame loss rate of the higher layer indicates a ratio of a quantity of video frames at the higher layer that are unsuccessfully decoded in a period of time to a total quantity of video frames at the higher layer; or
channel state information of the physical layer.

Optionally, the first indication information is further related to a reliability indicator of a service, and the reliability indicator of the service includes one or more of the following:

a quality of service QoS requirement of the service;
a mean opinion score MOS;
a target packet loss rate of the higher layer; or
a target frame loss rate of the higher layer.

Optionally, the first uplink NC code rate information indicates one or more of the following:

a ratio of a quantity of original data packets to a quantity of redundant packets generated by the original data packets;
a ratio of a quantity of original data packets to a total quantity of data packets, where the total quantity of data packets is a sum of the quantity of original data packets and a quantity of redundant packets generated by the original data packet;
a ratio of a quantity of redundant packets to a total quantity of data packets, where the total quantity of data packets is a sum of a quantity of corresponding original data packets for generating the redundant packets and the quantity of redundant packets;
a ratio of a quantity of original data packets newly participating in coding in a current coding window to a quantity of redundant packets corresponding to the current coding window;
a ratio of a quantity of original data packets newly participating in coding in a current coding window to a total quantity of data packets corresponding to the current coding window, where the total quantity of data packets corresponding to the current coding window is a sum of a quantity of original data packets and a quantity of redundant packets in the current coding window, or the total quantity of data packets corresponding to the current coding window is a sum of the quantity of original data packets newly participating in coding and the quantity of redundant packets in the current coding window; or
a ratio of a quantity of redundant packets in a current coding window to a total quantity of data packets corresponding to the current coding window, where the total quantity of data packets corresponding to the current coding window is a sum of a quantity of original data packets and the quantity of redundant packets in the current coding window, or the total quantity of data packets corresponding to the current coding window is a sum of a quantity of data packets newly participating in coding and the quantity of redundant packets in the current coding window.

Optionally, the second correspondence is one of a plurality of correspondences, the first indication information is one of a plurality of indexes, the first uplink NC parameter information is one of a plurality of pieces of uplink NC parameter information, there are the plurality of correspondences between the plurality of indexes and the plurality of pieces of uplink NC parameter information, one of the plurality of indexes corresponds to one or more of the plurality of pieces of uplink NC parameter information, and one of the plurality of pieces of uplink NC parameter information includes one or more pieces of parameter information related to uplink NC.

Optionally, the first indication information is control information of the higher layer.

Optionally, the first indication information is control information of the physical layer.

Optionally, the first indication information further indicates one or more of first uplink modulation scheme information or first uplink physical-layer code rate information of the physical layer, the first uplink modulation scheme information is used to determine a physical-layer modulation scheme of the to-be-sent uplink data, and the first uplink physical-layer code rate information is used to determine a physical-layer code rate of the to-be-sent uplink data.

Optionally, the first indication information is further related to a target block error rate TBLER of the physical layer.

Optionally, the method may further include the following.

The transmit end receives second indication information, where the second indication information indicates one or more of the following: a quantity of coded packets that are further required by the receive end for correct decoding, a quantity of coded packets that are correctly received by the receive end, or a success or a failure of decoding performed by the receive end corresponding to network coding.

The transmit end adjusts the first uplink NC code rate information based on the second indication information to determine second uplink NC code rate information, where the second uplink NC code rate information is used to determine a quantity of coded packets or redundant packets generated by performing the network coding processing on the to-be-sent uplink data by the higher layer.

Optionally, the method may further include the following.

The receive end sends the second indication information to the transmit end, where the second indication information indicates one or more of the following: a quantity of coded packets further required for correct decoding, a quantity of correctly received coded packets, or a success or failure of decoding corresponding to network coding, the second indication information is used to adjust the first uplink NC code rate information to determine the second uplink NC code rate information, and the second uplink NC code rate information is used to determine a quantity of coded packets or redundant packets generated by performing the network coding processing on the to-be-sent uplink data by the higher layer.

Optionally, the second indication information is the control information of the higher layer.

Optionally, the second indication information is the control information of the physical layer.

According to a fifth aspect, this application provides a communication apparatus. The communication apparatus may be a device, for example, an access network device; or may be a chip used in a device, for example, a chip in an access network device. The communication apparatus includes a module configured to perform the method described in any one of the first aspect, the third aspect, or the possible implementations of the first aspect or the third aspect.

According to a sixth aspect, this application provides a communication apparatus. The communication apparatus may be a device, for example, a terminal device; or may be a chip used in a device, for example, a chip in a terminal device. The communication apparatus includes a module configured to perform the method described in any one of the second aspect, the fourth aspect, or the possible implementations of the second aspect or the fourth aspect.

According to a seventh aspect, this application provides a communication apparatus. The communication apparatus may include a processor. The processor may be configured to be coupled to a memory, and optionally includes the memory. The processor and the memory may be units that are physically independent of each other, or the memory may be integrated with the processor. The communication apparatus may include a transceiver. The memory is configured to store a program. The transceiver is configured to receive and send various data packets or signals. The program includes program instructions. When the processor runs the program instructions, the communication apparatus is enabled to perform the communication method described in any one of the first aspect, the second aspect, the third aspect, the fourth aspect, or the possible implementations of any one of the aspects. The transceiver may be a radio frequency module in the communication apparatus, a combination of the radio frequency module and an antenna, or an input/output interface of a chip or a circuit. The communication apparatus may be a device, for example, an access network device or a terminal device; or may be a chip used in a device, for example, a chip used in an access network device or a terminal device.

According to an eighth aspect, this application provides a readable storage medium. The readable storage medium stores program instructions. When the program instructions are run on a processor, an apparatus including the processor is enabled to perform the communication method described in any one of the first aspect, the second aspect, the third aspect, the fourth aspect, or the possible implementations of any one of the aspects.

According to a ninth aspect, this application provides a program product including program instructions. When the program product runs, the communication method described in any one of the first aspect, the second aspect, the third aspect, the fourth aspect, or the possible implementations of any one of the aspects is performed.

According to a tenth aspect, this application provides a communication system. The communication system includes the communication apparatus that performs the method according to any one of the first aspect, the third aspect, or the implementations of the first aspect or the third aspect, and the communication apparatus that performs the method according to any one of the second aspect, the fourth aspect, the implementations of the second aspect or the fourth aspect.

When embodiments of this application are implemented, an NC parameter can adapt to a channel quality state of an NC layer, thereby improving system spectral efficiency while ensuring transmission reliability.

## BRIEF DESCRIPTION OF DRAWINGS

To describe the technical solutions in embodiments of this application more clearly, the following briefly describes the accompanying drawings used for describing the embodiments.

FIG. 1 is a schematic diagram of an architecture of a communication system to which an embodiment of this application is applied;
FIG. 2 is a schematic diagram of an application scenario of an embodiment of this application;
FIG. 3 is a simplified schematic diagram of a communication system according to an embodiment of this application;
FIG. 4a is a schematic diagram of a possible network coding procedure according to an embodiment of this application;
FIG. 4b is a schematic diagram of another possible network coding procedure according to an embodiment of this application;
FIG. 5 is a schematic diagram of random linear network coding;
FIG. 6 is a schematic flowchart of a communication method according to an embodiment of this application;
FIG. 7 is a schematic diagram of NC rate adaptation that is fed back by using an NC layer according to an embodiment of this application;
FIG. 8a is a schematic diagram of feedback information used when a PDCP layer in a CU of a gNB has an NC function according to an embodiment of this application;
FIG. 8b is a schematic diagram of feedback information used when a newly added NC layer in a DU of a gNB has an NC function according to an embodiment of this application;
FIG. 9 is a schematic diagram of NC rate adaptation that is fed back by using a physical layer according to an embodiment of this application;
FIG. 10 is a schematic diagram of combination of NC rate adaptation and AMC that are fed back performed by using a physical layer according to an embodiment of this application;
FIG. 11 is a schematic diagram of feedback information used when a newly added NC layer in a DU of a gNB has an NC function according to an embodiment of this application;
FIG. 12 is a schematic diagram of a structure of an apparatus according to an embodiment of this application;
FIG. 13 is a schematic diagram of a structure of another apparatus according to an embodiment of this application; and
FIG. 14 is a schematic diagram of a structure of a terminal device according to an embodiment of this application.

## DESCRIPTION OF EMBODIMENTS

The following describes the technical solutions in embodiments of this application with reference to the accompanying drawings in embodiments of this application.

To clearly describe the technical solutions in embodiments of this application, terms such as "first" and "second" are used in embodiments of this application to distinguish between same items or similar items that have basically same functions or purposes. For example, first information and second information are merely intended to distinguish between different information, and are not intended to limit a sequence of the first information and the second information. A person skilled in the art may understand that the terms such as "first" and "second" do not limit a quantity and an execution sequence, and the terms such as "first" and "second" do not indicate a definite difference.

To facilitate understanding of the data transmission method provided in embodiments of this application, the following describes a system architecture and an application scenario of the data transmission method provided in embodiments of this application. It may be understood that, the system architecture and the application scenario described in embodiments of this application are intended to describe the technical solutions in embodiments of this application more clearly, and do not constitute a limitation on the technical solutions provided in embodiments of this application.

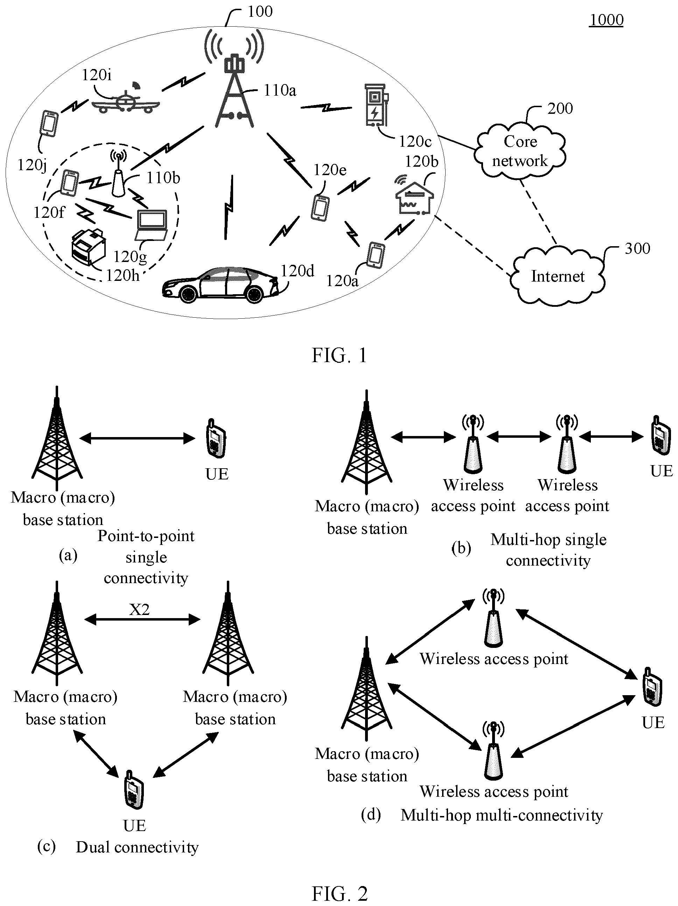

FIG. 1 is a schematic diagram of an architecture of a communication system 1000 to which an embodiment of this application is applied. As shown in FIG. 1, the communication system includes a radio access network (radio access network, RAN) 100 and a core network 200. Optionally, the communication system 1000 may further include Internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network device in a wireless or wired manner. A core network device and the radio access network device may be independent and different physical devices, or functions of the core network device and logical functions of the radio access network device may be integrated into a same physical device, or a part of functions of the core network device and a part of functions of the radio access network device are integrated into one physical device. Both terminals and radio access network devices may be connected to each other in a wired or wireless manner. FIG. 1 is merely a schematic diagram. The communication system may further include other access network devices, for example, may further include a wireless relay device and a wireless backhaul device, which are not drawn in FIG. 1.

The radio access network device (which may be referred to as an access network device for short) may be a device that provides a wireless communication function service and is usually located on a network side, and includes but is not limited to: a next generation NodeB (gNodeB, gNB) in a fifth generation (5th generation, 5G) communication system, a next generation NodeB in a sixth generation (6th generation, 6G) mobile communication system, a base station in a future mobile communication system, an access node in a Wi-Fi system, an evolved NodeB (evolved NodeB, eNB) in an LTE system, a radio network controller (radio network controller, RNC), a NodeB (NodeB, NB), a base station controller (base station controller, BSC), a home base station (for example, a home evolved NodeB, or a home NodeB, HNB), a baseband unit (base band unit, BBU), a transmission reception point (transmission reception point, TRP), a transmitting point (transmitting point, TP), a base transceiver station (base transceiver station, BTS), and the like. In a network structure, the access network device may include a central unit (central unit, CU) node, a distributed unit (distributed unit, DU) node, a RAN device including a CU node and a DU node, or a RAN device including a control plane CU node, a user plane CU node, and a DU node. A specific technology and a specific device form used for the radio access network device are not limited in this embodiment of this application. For ease of description, the following uses an example in which a base station is used as the radio access network device for description.

The terminal may also be referred to as a terminal device, user equipment (user equipment, UE), a mobile station (mobile station, MS), a mobile terminal (mobile terminal, MT), or the like, and may be an entity on a user side configured to receive or transmit a signal, for example, a mobile phone. The terminal device may be user equipment (user equipment, UE). The UE includes a handheld device, an in-vehicle device, a wearable device, or a computing device that has a wireless communication function. For example, the UE may be a mobile phone (mobile phone), a tablet computer, or a computer having a wireless receiving/transmitting function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in remote medical, a wireless terminal in a smart grid, a wireless terminal in a smart city (smart city), a wireless terminal in a smart home (smart home), or the like. The terminal may be widely used in various scenarios, for example, device-to-device (device-to-device, D2D) communication, vehicle-to-everything (vehicle-to-everything, V2X) communication, machine-type communication (machine-type communication, MTC), Internet of Things (Internet of Things, IoT), virtual reality, augmented reality, industrial control, self-driving, remote medical, a smart grid, smart furniture, smart office, smart wear, smart transportation, and a smart city. The terminal may be a mobile phone, a tablet computer, a computer with a wireless receiving/transmitting function, a wearable device, a vehicle, an uncrewed aerial vehicle, a helicopter, an airplane, a ship, a robot, a robotic arm, a smart home device, or the like. In embodiments of this application, an apparatus configured to implement a function of the terminal may be a terminal, or may be an apparatus that can support the terminal in implementing the function, for example, a chip system, a communication module, or a modem. The apparatus may be installed in the terminal. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is a terminal. A specific technology and a specific device form that are used for the terminal device are not limited in embodiments of this application.

The base station serves a cell. The terminal communicates with the base station by using a transmission resource (for example, a frequency domain resource, or in other words, a frequency spectrum resource) used for the cell. The cell may be a cell corresponding to the base station (for example, a base station). The cell may belong to a macro base station, or may belong to a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to providing a high-speed data transmission service. The base station may be a macro base station (for example, 110a in FIG. 1), or may be a micro base station or an indoor base station (for example, 110b in FIG. 1), or may be a relay node or a donor node, a device that provides a wireless communication service for a terminal in a V2X communication system, a radio controller in a cloud radio access network (cloud radio access network, CRAN) scenario, a relay station, an in-vehicle device, a wearable device, a RAN device in a future evolved network, or the like.

Optionally, the terminal may also be configured to serve as a base station. For example, the terminal may serve as a scheduling entity, and the terminal provides a sidelink signal between terminals in vehicle-to-everything (vehicle-to-everything, V2X), device-to-device (device-to-device, D2D), peer-to-peer (peer-to-peer, P2P), or the like.

The base station and the terminal may be at fixed locations or may be movable. The base station and the terminal may be deployed on land, including indoor, outdoor, handheld, or vehicle-mounted; may be deployed on a water surface; or may be deployed on an airplane, a balloon, and an artificial satellite in the air. Application scenarios of the base station and the terminal are not limited in this embodiment of this application.

Roles of the base station and the terminal may be relative to each other. For example, a helicopter or an uncrewed aerial vehicle 120i in FIG. 1 may be configured as a mobile base station. For the terminal 120j that accesses the radio access network 100 through 120i, the terminal 120i is a base station. However, for the base station 110a, 120i is a terminal, that is, 110a and 120i communicate with each other by using a wireless air-interface protocol. Certainly, 110a and 120i may also communicate with each other by using an interface protocol between base stations. In this case, 120i is also a base station relative to 110a. Therefore, both the base station and the terminal may be collectively referred to as communication apparatuses. 110a, 110b, and 120a to 120j in FIG. 1 may be referred to as communication apparatuses that have respective corresponding functions, for example, communication apparatuses having a base station function or communication apparatuses having a terminal function.

Communication between the base station and the terminal, between base stations, and between terminals may be performed by using a licensed spectrum, or may be performed by using a license-free spectrum, or may be performed by using both a licensed spectrum and a license-free. Communication may be performed by using a spectrum below 6 gigahertz (gigahertz, GHz), or may be performed by using a spectrum above 6 GHz, or may be performed by using a spectrum below 6 GHz and a spectrum above 6 GHz. A spectrum resource used for wireless communication is not limited in this embodiment of this application.

In this embodiment of this application, a function of the base station may alternatively be performed by a module (for example, a chip) in the base station, or may be performed by a control subsystem including a base station function. The control subsystem including the base station function herein may be a control center in the foregoing application scenarios of the terminal such as a smart grid, industrial control, smart transportation, and a smart city. The function of the terminal may alternatively be performed by a module (for example, a chip or a modem) in the terminal, or may be performed by an apparatus including a terminal function.

This application may be applied to a plurality of specific communication scenarios, for example, a scenario of point-to-point transmission between a base station and a terminal or between terminals (point-to-point transmission between a base station and a terminal shown in FIG. 2(a)), multi-hop (as shown in FIG. 2(b) and FIG. 2(d)) transmission between a base station and a terminal, or dual connectivity (Dual Connectivity, DC) (as shown in FIG. 2(c)) or multi-connection between a plurality of base stations and terminals. It should be noted that, the foregoing specific communication application scenarios are merely examples, and do not constitute a limitation. Particularly, from a perspective of a service, this embodiment of this application is applicable to many service scenarios, for example, a data coding scenario and an uplink large-capacity scenario in an extended reality (extended reality, XR) service. In addition, FIG. 2 constitutes no limitation on a network architecture applicable to this application, and transmission such as uplink transmission, downlink transmission, access link transmission, backhaul (backhaul) link transmission, or sidelink (Sidelink) transmission is not limited in this application.

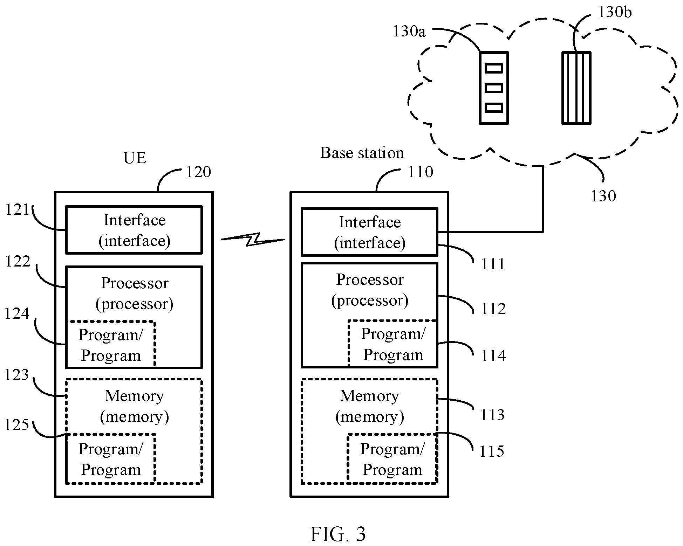

FIG. 3 is a simplified schematic diagram of a communication system according to an embodiment of this application. For simplicity, FIG. 3 shows only a base station 110, a terminal 120, and a network 130. The base station 110 includes an interface 111 and a processor 112. The processor 112 may optionally store a program 114. The base station 110 may optionally include a memory 113. The memory 113 may optionally store a program 115. The terminal 120 includes an interface 121 and a processor 122. The processor 122 may optionally store a program 124. The terminal 120 may optionally include a memory 123. The memory 123 may optionally store a program 125. These components work together to provide various functions described in this application. For example, the processor 112 and the interface 121 work together to provide a wireless connection between the base station 110 and the terminal 120. The processor 122 and the interface 121 work together to implement downlink transmission and/or uplink transmission of the terminal 120. The downlink is a direction from the base station to the terminal, and the uplink is a direction from the terminal to the base station.

The network 130 may include one or more network nodes 130a and 130b to provide core network functions. The network nodes 130a and 130b may be 5G core network nodes, or core network nodes of an earlier generation (for example, 4G, 3G, or 2G). For example, the network nodes 130a and 130b may be access management functions (AMFs), mobility management entities (MMEs), and the like. The network 130 may further include one or more network nodes in a public switched telephone network (PSTN), a packet data network, an optical network, and an Internet Protocol (IP) network, a wide area network (WAN), a local area network (LAN), a wireless local area network (WLAN), a wired network, a wireless network, a metropolitan area network, and another network, so that the terminal 120 and the base station 110 can communicate with each other.

The processor (for example, the processor 112 and/or the processor 122) may include one or more processors. The processor (for example, the processor 112 and/or the processor 122) may separately include one or more of the following: a microprocessor, a microcontroller, a digital signal processor (DSP), a digital signal processing device (DSPD), an application-specific integrated circuit (ASIC), a field programmable gate array (FPGA), a programmable logic device (PLD), gating logic, transistor logic, a discrete hardware circuit, a processing circuit, or other proper hardware, firmware, and/or a combination of hardware and software, configured to perform various functions described in this application.

The processor (for example, the processor 112 and/or the processor 122) may be a general-purpose processor or a dedicated processor. For example, the processor 112 and/or the processor 122 may be a baseband processor or a central processing unit. The baseband processor may be configured to process a communication protocol and communication data. The central processing unit may be configured to enable the base station 110 and/or the terminal 120 to execute a software program and process data in the software program.

The interface (for example, the interface 111 and/or the interface 121) may include an interface configured to implement communication with one or more computer devices (for example, a terminal, a BS, and/or a network node). In some embodiments, the interface may include a wire for coupling a wired connection, a pin for coupling a wireless transceiver, or a chip and/or a pin for wireless connection. In some embodiments, the interface may include a transmitter, a receiver, a transceiver, and/or an antenna. The interface may be configured to use any available protocol (such as 3GPP standard).

The program in this application is used to represent software in a broad sense. Non-limiting examples of software are program code, a program, a subprogram, an instruction, an instruction set, code, a code segment, a software module, an application program, a software application program, and the like. The program may run in a processor and/or a computer, so that the base station 110 and/or the terminal 120 perform/performs various functions and/or processes described in this application.

A memory (for example, the memory 113 and/or the memory 123) may store data manipulated by the processors 112 and 122 when executing the software. The memories 113 and 123 may be implemented by using any storage technology. For example, the memory may be any available storage medium that can be accessed by a processor and/or a computer. Non-limiting examples of the storage medium include: a RAM, a ROM, an EEPROM, a CD-ROM, a removable medium, an optical disc storage, a magnetic disk storage medium, a magnetic storage device, a flash memory, a register, a state storage, a remote mounted storage, a local or remote storage component, or any other medium that can carry or store software, data, or information and can be accessed by a processor/computer.

The memory (for example, the memory 113 and/or the memory 123) and the processor (for example, the processor 112 and/or the processor 122) may be separately disposed or integrated. The memory may be configured to connect to the processor, so that the processor can read information from the memory, and store and/or write information into the memory. The memory 113 may be integrated into the processor 112, and the memory 123 may be integrated into the processor 122. The processor (for example, the processor 112 and/or the processor 122) and the memory (for example, the memory 113 and/or the memory 123) may be disposed in an integrated circuit (for example, the integrated circuit may be disposed in a terminal, a base station, or another network node).

The foregoing content briefly describes a system architecture and a possible application scenario of embodiments of this application. To better understand the technical solutions in embodiments of this application, the following briefly describes network coding and related terms.

The network coding function in this application includes performing network coding on an original data packet and adding a packet header of a coded packet. Network coding may be implemented by using an encoder. Input of the encoder is K original data packets, and output of the encoder is N coded data packets (referred to as coded packets for short), where both N and K are positive integers, and N is greater than K. The coded packets include (N-K) redundant packets and K system packets, or include N redundant packets (that is, the coded packets all are redundant packets, and include no system packet). A coding coefficient of the system packet is a unit vector, to be specific, content of the system packet is the same as content of the original data packet. A coding coefficient of the redundant packet is a non-unit vector. Through association between content of the redundant packet and content of an original data packet for generating the redundant packet, a receive end may decode the redundant packet together with a successfully received original data packet or system packet, to recover an unsuccessfully received original data packet. Based on the feature of network coding, the original data packets have a same size. Further, the network coding function may include a process of performing processing on an original data unit, for example, a service data unit (service data unit, SDU) or a protocol data unit (protocol data unit, PDU), to obtain original data packets of a same size. The processing may include one or more of segmentation, concatenation, or padding (padding). The network coding function of a transmit end corresponds to the network decoding function of the receive end. The receive end may recover K original data packets by decoding at least K successfully received coded packets together. A protocol layer having the network coding function or a decoding function corresponding to network coding is referred to as a network coding/decoding layer. In this application, the network coding/decoding layer is referred to as a network coding layer for short, that is, the protocol layer having the network coding function and/or the decoding function corresponding to network coding is referred to as the network coding layer.

The network coding layer may be a protocol layer such as a radio resource control (radio resource control, RRC) layer, a packet data convergence protocol (packet data convergence protocol, PDCP) layer, a backhaul adaptation protocol (backhaul adaptation protocol, BAP) layer, a radio link control (radio link control, RLC) layer, a medium access control (medium access control, MAC) layer, or a physical layer (physical layer, PHY). The network coding layer may alternatively be a new protocol layer other than the MAC layer, the RLC layer, the BAP layer, and the PDCP layer. A network coding layer may be added above the PDCP layer, a network coding layer may be added above the BAP layer, a network coding layer may be added between the PDCP layer and the RLC layer, a network coding layer may be added between the RLC layer and the MAC layer, or a network coding layer may be added between the MAC layer and the PHY layer. In this application, the network coding layer is higher than a physical layer.

Common network coding schemes include two types: block code and convolutional code. Block code scheme includes one or more of the following: random linear network coding (random linear network coding, RLNC), deterministic linear network coding (deterministic linear network coding, DLNC), a batched sparse code (batched sparse code, BATS code), an erasure code (erasure code), a fountain code (fountain code), a maximum distance separable code (maximum distance separable code, MDS code), an LT (Luby Transform) code, a rapid tornado (Rapid tornado) code, a RaptorQ code, a rateless (rateless) code, an RS (Reed-solomon) code, and the like. The convolutional code scheme includes one or more of the following: convolutional network coding (convolutional network coding, CNC), a streaming code (streaming code), sliding window network coding (sliding window network coding), and the like.

The following describes two possible network coding procedures of the network coding function of the transmit end (referred to as the transmit end for short).

A first possible network coding procedure is as follows.

First, a PDU or an SDU is obtained. Using a PDU as an example, one or more of processing such as segmentation, concatenation, or padding (padding) is performed on one or more PDUs to obtain original data packets of a same size. The original data packet carries a correspondence between each original data packet and the one or more PDUs corresponding to the original data packet. The "carrying" may be explicit "carrying", for example, carrying a location mapping relationship between each original data packet and the one or more PDUs corresponding to the original data packet; or the "carrying" may be implicit "carrying", for example, a correspondence between each original data packet and the one or more PDUs corresponding to the original data packet is default. In this way, the receive end (referred to as the receive end for short) can recover the PDU from the original data packet based on the correspondence.

Optionally, a packet header of each original data packet carries a correspondence between the original data packet and the one or more PDUs corresponding to the original data packet. In this case, in a possible implementation, one or more of the foregoing processing such as segmentation, concatenation, or padding are first performed on the PDU to obtain original data, and then a packet header is added to the original data to obtain original data packets of a same size.

Optionally, the correspondence may be indicated by using segmentation and/or concatenation of the one or more PDUs.

It may be understood that, if the PDUs or the SDUs are of a same size, the step of performing one or more of processing such as segmentation, concatenation, or padding (padding) on one or more PDUs to obtain original data packets of a same size may be skipped. In other words, the PDUs or the SDUs are original data packets of a same size.

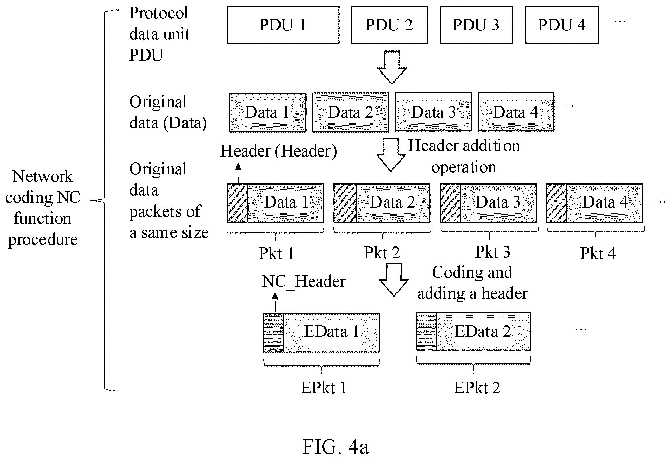

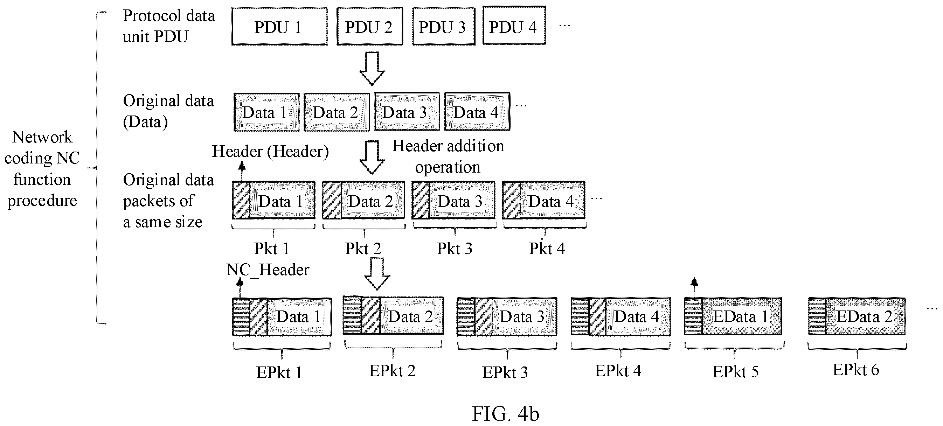

FIG. 4a and FIG. 4b use an example in which sizes of PDUs are unequal and the foregoing correspondence is carried by using a packet header. A PDU 1 to a PDU 4 are first processed to obtain original data (Data 1 to Data 4). Herein, the processing on the PDU may be one or more of operations such as segmentation, concatenation, or padding. Sizes of the original data may be equal or unequal. Then, an operation of adding a packet header to the group of original data is performed to obtain K original data packets, that is, Pkt 1 to Pkt 4 in FIG. 1. The original data packets may be understood as data packets that are not coded, and sizes of the original data packets are equal.

Further, a plurality of original data packets of a same size are coded.

Specifically, there may be three manners.

Manner 1 is shown in FIG. 4a. A group of K original data packets may be obtained and packet headers of coded packets may be added to obtain (N-K) coded packets. The coded packets herein may be referred to as check packets or redundant packets, where K is a positive integer, and N is a positive integer not less than K.

Through the foregoing operations, the transmit end finally sends K original data packets and (N-K) redundant packets.

Manner 2 and Manner 3 are shown in FIG. 4b. K original data packets are processed to obtain N coded packets, for example, EPkt 1 to EPkt 6 in the figure. The coded packets may be classified into system packets and check packets. The system packet may also be referred to as a system data packet, and the check packet may be referred to as a redundant packet. A packet header of the coded packet may include a coefficient factor field, and the coefficient factor field indicates a coding coefficient for obtaining the coded packet. The system packet (EPkt 1 to EPkt 4) includes a packet header and a packet body of the coded packet. Content of the packet body is consistent with content of an original data packet. The coefficient factor field included in the packet header is a unit vector. Therefore, a process of processing an original data packet to obtain a system packet may include two manners: Manner 2 and Manner 3, where K is a positive integer, and N is a positive integer not less than K.

In Manner 2, a packet header of a coded packet is directly added to the original data packet to generate the system packet, that is, coding processing is not performed.

In Manner 3, coding processing is performed on the original data packet, to be specific, the original data packet is coded by using a coefficient factor of a unit vector, and then a packet header of a coded packet is added to obtain the system packet.

A manner of generating a check packet in Manner 2 is the same as that in Manner 3, and each check packet is generated by coding the original data packet and adding a packet header of a coded packet. As shown in FIG. 4b, (N-K) check packets (for example, EPkt 5 and EPkt 6) are generated by coding K original data packets (for example, Pkt 1 to Pkt 4) and adding coded packet headers. Packet body parts (EData 1 and EData 2) of the K original data packets are results obtained by multiplying the K original data packets by a coefficient factor and then adding the multiplication results, where the coefficient factor is a non-unit vector.

Through the foregoing operations, the transmit end finally sends N coded packets.

Correspondingly, FIG. 4a is still used as an example. For the receive end, in Manner 1, the receive end receives at least K data packets, and the K data packets are linearly independent, that is, a rank of a corresponding coefficient matrix is equal to K. In this way, the receive end may recover K original data packets through decoding, and then recover a corresponding PDU. All of the at least K data packets may be redundant packets, or some of the at least K data packets are original data packets and some of the at least K data packets are redundant packets. This is not limited herein. It may be understood that, if the receive end receives K original data packets, the receive end may not perform decoding.

In Manner 2 and Manner 3, FIG. 4b is still used as an example. The receive end needs to receive at least K data packets, and the K data packets are linearly independent, that is, a rank of a corresponding coefficient matrix is equal to K. In this way, the receive end recovers K original data packets through decoding, and then recovers a corresponding PDU. All of the at least K data packets may be redundant packets, or some of the at least K data packets are system packets and some of the at least K data packets are redundant packets. This is not limited herein. It may be understood that, if the receive end receives K system packets, the receive end may not perform decoding, only removes a packet header of a coded packet.

In the foregoing network coding function, one or more of processing such as segmentation, concatenation, or padding (padding) is performed on one or more PDUs/SDUs to obtain original data packets of a same size. The original data packet carries a correspondence between each original data packet and the one or more PDUs/SDUs corresponding to the original data packet.

A second possible network coding procedure is as follows.

In the second possible network coding procedure, one or more of processing such as virtual segmentation/concatenation and padding may be performed to obtain original data packets of a same size. In this manner, the PDU/SDU and header information of each PDU/SDU are first mapped to a cache. The cache may be a real cache or may be a virtual cache. The header information of each PDU/SDU indicates a location at which each PDU/SDU is mapped in the cache. Then, a plurality of original data packets of a same size are obtained from the cache. Further, the plurality of original data packets of a same size are coded to obtain coded packets. A manner of obtaining the plurality of original data packets of a same size from the cache may be preset, or indicated by the transmit end to the receive end, or determined by one party in a control state in two parties in data transmission and then indicated to the other party. In this manner, the original data packet has no packet header. However, considering alignment with the description in the first manner, data segments of a same size obtained from the cache in this solution are still referred to as the original data packets. It may be understood that the original data packet in this solution may also be referred to as an original data segment.

A manner of coding the plurality of original data packets of a same size to obtain coded packets is similar to Manner 1 in the first possible implementation procedure. A difference from Manner 1 lies in the following: After coding, the transmit end sends one or more PDUs/SDUs and header information of the one or more PDUs/SDUs, and one or more redundant packets obtained through coding.

It may be understood that, input of a network coding layer may be one or more original data units, for example, one or more SDUs/PDUs, and output of the network coding layer may be one or more PDUs. The one or more PDUs may include the foregoing original data packet and redundant packet, or the foregoing system packet and redundant packet. Outputting the one or more PDUs may be understood as outputting, by using a communication interface, the one or more PDUs in a terminal device or an access network device to a module that subsequently processes the one or more PDUs. It may be understood that, the outputting in this application may be sending a signal through an air interface, or may be outputting, in an apparatus, a signal to another module (for example, a terminal device or an access network device) in the apparatus by using a communication interface. A specific process is specifically described in an application scenario. Details are not described herein.

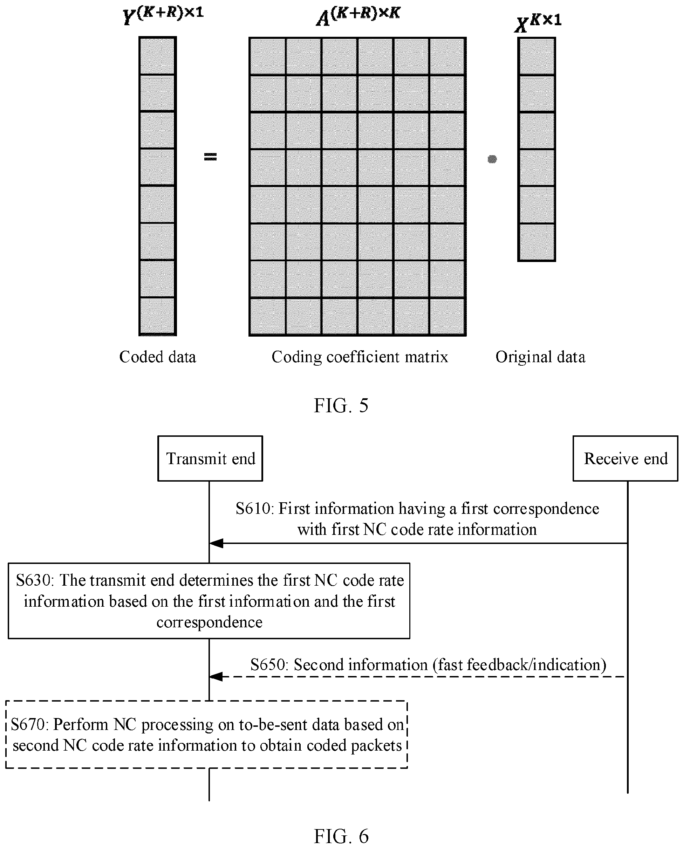

A specific coding operation is briefly described by using RLNC as an example. In the RLNC solution, one data block (block) is used as one coding unit, one data block includes a plurality of original data packets of a same size, and a group of coded data packets may be obtained by constructing a coding coefficient matrix to code the original data packets. Generally, a coefficient in the coding coefficient matrix is randomly selected from a finite field, such as a Galois field (Galois Field, GF). FIG. 5 is a schematic diagram of random linear network coding. As shown in FIG. 5, a size of a coding coefficient matrix (that is, $A^{(K+R) \times K}$ in FIG. 5) is $(K+R) \times K$, that is, $(K+R)$ rows and K columns. In this example, a row vector in the coding coefficient matrix is referred to as a coding coefficient vector, K is a positive integer, and R is an integer not less than 0. Network coding is performed on a data block ($X^{K \times 1}$ in FIG. 5) including K original data packets to obtain (K+R) coded data packets ($Y^{(K+R) \times 1}$ in FIG. 5), where a corresponding code rate is represented as K/(K+R), and a corresponding redundancy rate is represented as R/(K+R). A coefficient in the coding coefficient matrix is randomly selected from a GF(q) field, where q represents a size of the Galois field, and a value of the Galois field is in an interval [0, q-1]. It should be understood that, in the RLNC solution, coded data blocks are not associated with each other. One coded data block is (K+R) pieces of coded data obtained by performing network coding on a data block including K original data packets. To be specific, a coding operation is performed on each independent data block, and redundancy (code rates) of the data blocks may be the same or may be different. A coding end/transmit end uniformly adds packet header information to the K original data packets and the generated (K+R) pieces of coded data packets, and then sends the original data packets and the coded data added with the packet header. A decoding end/receive end receives at least K correct coded data packets whose coding coefficient vectors are linearly independent, or receives at least K correct coded data packets, and when a rank of a coding coefficient matrix corresponding to the received coded data packets is K, can correctly decode and recover the K original data packets. This is because the coded data packets integrate information about multiple original data packets, and the receive end may recover the original data by using the coded data packets.

The following describes some terms in this application.

System packet: The system packet is obtained by adding a coded packet header to coded data generated by multiplying an original data packet by a coding coefficient of a unit vector, or by directly adding a coded packet header to an original data packet. For example, a coding coefficient matrix (that is, A(K+R)×K in FIG. 5) with a size of (K+R)×K is used to perform network coding on the original data packet to obtain (K+R) coded data packets. The coding coefficient matrix may be written as $\begin{bmatrix} I_K \\ G_{R \times K} \end{bmatrix}$, where a submatrix $I_K$ formed by the first K rows is an identity matrix and is formed by K unit vectors. K pieces of coded data corresponding to the $I_K$ part in the obtained (K+R) pieces of coded data are data parts of K system packets, and a system packet is obtained when packet header information is added to the coded data.

Redundant packet: The redundant packet is generated by performing network coding on an original data packet. A coding coefficient of the redundant packet is a non-unit vector. For example, a coding coefficient matrix (that is, A(K+R)×K in FIG. 5) with a size of (K+R)×K is used to perform network coding to obtain (K+R) pieces of coded data. The coding coefficient matrix may be written as $\begin{bmatrix} I_K \\ G_{R \times K} \end{bmatrix}$, R pieces of coded data corresponding to the $G_{R \times K}$ part in the (K+R) pieces of coded data are data parts of R redundant coded packets, and redundant packets are obtained when packet header information is added to the R pieces of coded data. In embodiments of this application, the term "redundant packet" may also be referred to as a "check packet", and the two may be used interchangeably.

Network coding packet: The network coding packet is a term related to a block code. In the block code, a network coding packet is a set including a plurality of original data packets. For example, every K original data packets are grouped into one network coding packet for independent network coding, so as to obtain coded data corresponding to the network coding packet. In embodiments of this application, the term "network coding packet" may also be referred to as a "network coding block", a "coding packet", or a "coding block".

Network coding window: The network coding window is a term used for a network coding scheme or convolutional code that includes a sliding window. The network coding window is a set including a plurality of original data packets, and original data packets included in different network coding windows may be partially the same. For example, K original data packets are obtained from L original data packets by sliding a window, where both L and K are positive integers and L is not less than K, the window is used as a current network coding window, and network coding is performed on the K original data packets in the network coding window to obtain coded data corresponding to the network coding window. The network coding window may be slid to obtain another group of original data packets as to-be-coded data packets. It should be noted that, sizes of the network coding window may vary before and after the sliding. The size of the network coding window is a quantity of original data packets included in the network coding window, and original data packets included in the network coding window before and after the sliding may be partially the same. In embodiments of this application, the term "network coding window" may also be referred to as a "network coding window", a "network coding sliding window", a "coding window", a "sliding window", or the like.

Coding depth of network coding: A network coding window is a term used for a network coding scheme or convolutional code that includes a sliding window. The coding depth of network coding is a quantity of original data packets coded in the network coding window, or a size of the network coding window. For example, K original data packets are obtained from L original data packets by sliding a window, where both L and K are positive integers and L is not less than K, the window is used as a current network coding window, and network coding is performed on the K original data packets in the network coding window to obtain coded data corresponding to the network coding window. In this case, a coding depth of current network coding is K. In embodiments of this application, the term "coding depth of network coding" may also be referred to as a "convolution depth of network coding", a "coding depth", a "convolution depth", a "sliding window size", a "window size", or the like.

Convolution depth of network coding: The convolution depth of network coding is the same as the "coding depth of network coding".

Network coding sliding window: The network coding sliding window is the same as the "network coding window".

Finite field: The finite field is also referred to as a Galois field (Galois field) and is a field that includes only a finite quantity of elements. Addition, subtraction, multiplication, and division operations can be performed on the field, and results of the addition, subtraction, multiplication, and division operations do not exceed a set of the field.

Decoding state corresponding to network coding: The decoding state indicates a success rate and/or a failure rate of decoding corresponding to a network coding packet or a network coding sliding window in a period of time, and if all original data packets in the network coding packet or the network coding sliding window are successfully decoded, the network coding packet or the network coding sliding window is successfully decoded; if not all original data packets in the network coding packet or the network coding sliding window are successfully decoded, the network coding packet or the network coding sliding window fails to be decoded; the success rate is a proportion of network coding packets that are successfully decoded in a period of time to all network coding packets, or a proportion of network coding sliding windows that are successfully decoded in a period of time to all network coding sliding windows; and the failure rate is a proportion of network coding packets that fail to be decoded in a period of time to all network coding packets, or a proportion of network coding sliding windows that fail to be decoded in a period of time to all network coding sliding windows.

Packet loss rate: The packet loss rate is a ratio of a quantity of data packets that are unsuccessfully received to a total quantity of data packets. For a network coding scheme, the packet loss rate may also be a ratio of a quantity of original data packets that are unsuccessfully received or that are unsuccessfully decoded to a total quantity of original data packets. The total quantity of data packets or the total quantity of original data packets is a total quantity of sent data packets or a total quantity of to-be-received data packets.

Frame loss rate: The frame loss rate is a ratio of a quantity of frames that fail to be decoded or that are lost to a total quantity of frames. The frame loss rate is a performance indicator for measuring a service in which XR, video, voice data, or the like is transmitted frame by frame. The total quantity of frames is a total quantity of sent frames or a total quantity of to-be-received frames.

Target packet loss rate: The target packet loss rate a target value of an expected packet loss rate, a value of an expected packet loss rate of a receive end, or a value of a packet loss rate expected by the receive end.

Target frame loss rate: The target frame loss rate a target value of an expected frame loss rate, a value of an expected frame loss rate of a receive end, or a value of a frame loss rate expected by the receive end.

Network coding code rate: The network coding code rate is a ratio of a quantity of original data packets to a quantity of coded data packets, or the network coding code rate is a ratio of a quantity of original data packets newly participating in coding in a current coding window to a total quantity of data packets corresponding to the current coding window, or a ratio of a quantity of original data packets included in the current network coding window to a quantity of coded data packets corresponding to the current network coding window. The quantity of original data packets newly participating in coding is a quantity of original data packets included after sliding of a sliding window minus a quantity of original data packets included after the sliding that are the same as those before the sliding. The quantity of coded data packets is a sum of a quantity of system packets and a quantity of redundant packets, or is the quantity of redundant packets.

Network coding layer: The network coding layer is a protocol layer having a network coding function, and the network coding layer may be one or more of protocol layers having the network coding function, such as an RRC layer, a PDCP layer, a BAP layer, an RLC layer, or a MAC layer. A specific layer is not limited in this application. Alternatively, the network coding layer may be a new protocol layer other than the foregoing protocol layers. For example, the new protocol layer may be above the PDCP layer, above the BAP layer, between the PDCP layer and the RLC layer, between the RLC layer and the MAC layer, or between the MAC layer and a PHY layer. A location of the new protocol layer may not be limited in this application. In embodiments of this application, the term "network coding layer" may also be referred to as a "coding and decoding layer", a "network coding and decoding layer", a "network coding and decoding layer", a "network coding/decoding layer", or another name. This is not limited in this application.

Channel state information (channel state information, CSI): The CSI is channel state information used by UE to feed back downlink channel quality to a base station, so that the base station selects an appropriate MCS for downlink data transmission, to reduce a block error rate (block error rate, BLER) of downlink data transmission. The CSI may include one or more of a channel quality indicator (channel quality indicator, CQI), a precoding matrix indicator (precoding matrix indicator, PMI), a CSI-reference signal resource indicator (CSI-RS resource indicator, CRI), a synchronization signal/physical broadcast channel block resource indicator (SS/PBCH block resource indicator, SSBRI), a layer indicator (layer indicator, LI), a rank indicator (rank indicator, RI), layer 1 reference signal received power (layer 1 reference signal received power, L1-RSRP). A time-frequency domain resource used during CSI transmission may be configured by the base station.

Channel quality indicator (channel quality indication, CQI): The CQI is used to measure downlink channel quality of a cell, and is measured and reported by UE. In a possible implementation, the UE measures a corresponding reference signal or pilot signal based on an indication of a higher layer, and then reports a CQI report. A network side determines, based on the CQI report reported by the UE and with reference to a current network resource condition, whether to adjust related configuration of a modulation scheme, resource allocation, or multiple-input multiple-output (multiple-input multiple-output, MIMO) of the UE.

Signal to interference plus noise ratio (signal to interference plus noise ratio, SINR): The SINR is an indicator used to measure signal quality. A unit of the SINR is usually dB. A downlink SINR usually can be counted at a test terminal, and indicates a ratio of a useful signal to interference plus noise floor.

Reference signal received power (reference signal received power, RSRP): The RSRP is an average value of power of signals received on all resource elements carrying a reference signal in an orthogonal frequency division multiplexing (orthogonal frequency division multiplexing, OFDM) symbol, excluding noise and interference.

Received signal strength indicator (received signal strength indicator, RSSI): The RSSI is average power of all signals (including a reference signal and a data signal, an interference signal in a neighboring cell, a noise signal, and the like) received in an OFDM symbol, that is, total power of all subcarriers in an entire frequency band, including interference and noise.

Reference signal receiving quality (reference signal receiving quality, RSRQ): The RSRQ is a ratio of the RSRP to the RSSI.

Acknowledgment/negative acknowledgement (ACK/NACK) from a physical layer: A physical layer of a receive end detects a received transport block (transport block, TB) or code block group (code block group, CBG) by using a cyclic redundancy check (cyclic redundancy check, CRC) code. If no error is detected, the physical layer sends an ACK to a transmit end; or if an error is detected, the physical layer sends a NACK, and may send a retransmission request to the transmit end.

Adaptive modulation and coding (adaptive modulation and coding, AMC): The AMC is a rate control technology that adjusts a modulation mode and a coding rate of radio link transmission to ensure transmission quality of a link while ensuring that transmit power is constant.

An erasure channel quality indicator (erasure channel quality indicator, ECQI): The ECQI is an erasure channel quality state indicator of a network coding layer. An erasure channel may be understood as that a TB that fails to be decoded at a physical layer is not delivered to a higher layer, for example, a PDCP layer, and a packet loss, that is, an erasure channel, occurs from a perspective of the higher layer.

Mean opinion score (mean opinion score, MOS): The MOS is a subjective evaluation method for evaluating video or voice quality from a perspective of user perception. A lower MOS indicates poorer quality.

Reliability: The reliability is an important indicator for measuring performance of a communication system, and is a reliability degree of information received on a given channel. Generally, the reliability is a bit error rate, which indicates a degree of an error occurred in a received digital signal.

Quality of service (quality of service, QoS): The QoS is a service capability provided for network communication, and a QoS indicator usually includes an indicator related to a delay, a packet loss, and/or the like.

Block error rate (block error rate, BLER): The BLER is a ratio of a quantity of blocks with a data transmission error to a total quantity of received blocks in a time period. A lower block error rate indicates better communication quality of a digital communication system.

Target block error rate (target block error rate, TBLER): The TBLER is an expected block error rate, and is an expected ratio of a quantity of blocks with a data transmission error to a total quantity of received blocks in a time period at a receive end.

Quadrature phase shift keying (quadrature phase shift keying, QPSK): The QPSK is a modulation scheme in which a symbol represents 2-bit information.

64 quadrature amplitude modulation (64 quadrature amplitude modulation, 64QAM): The 64QAM is a modulation scheme in which a symbol represents 6-bit information.

Physical-layer code rate: The physical-layer code rate is a channel coding code rate, and is usually a ratio of a length or a bit quantity of information bit to a length or a bit quantity of coded bits obtained after coding.

Modulation and coding scheme (modulation and coding scheme, MCS): A base station uses the MCS to ensure transmission efficiency and transmission quality of a UE service. When channel quality is good, a higher-order modulation scheme and higher coding efficiency (adding fewer protection bits) are used; or when channel quality is poor, a lower-order modulation scheme and lower coding efficiency (adding more protection bits) are used.

Decoding corresponding to network coding: Decoding for network coding is an inverse process of network coding. Received coded data is used, and an inverse matrix of a matrix corresponding to the coded data may be multiplied by the coded data to obtain an original data packet.

Rank (rank) of a matrix corresponding to coded data. The rank may reflect a quantity of data packets whose coding coefficient vectors are linearly independent.

Transport block (transport block, TB): The TB is a data block of a MAC PDU transmitted in a time unit, where the time unit may be a transmission time interval (transmission time interval, TTI).

Protocol data unit (protocol data unit, PDU): The PDU is a data unit transmitted between protocol entities. The PDU includes information from an upper layer and additional information of an entity at a current layer. The PDU is transmitted to a lower layer.

Service data unit (service data unit, SDU): The SDU is a data unit transmitted between protocol layers, and is data from an upper layer or data to be transmitted to the upper layer.

Code block group (code block group, CBG): The CBG is a minimum unit for hybrid automatic repeat request (hybrid automatic repeat request, HARQ) retransmission introduced into NR. One CBG includes one or more code blocks, and one TB includes C code blocks. For a TB including C code blocks, a quantity of actually transmitted CBGs is M=min(N, C), where N is a parameter configured by a base station, for example, configured by using an information element "maxCodeBlockGroupsPerTransportBlock", where N may be a maximum quantity of CBGs included in each downlink TB. To be specific, one TB is divided into a plurality of CBGs, these CBGs all may be decoded by UE, and the UE may send ACK/NACK feedback for each individual CBG.

The foregoing describes the terms in a network coding technology and in embodiments of this application. As described above, the network coding technology is a forward error correction technology in which an original data packet is coded and redundancy is added in advance to prevent a packet loss or performance loss in wireless transmission, thereby reducing feedback overheads. Therefore, network coding provides a different solution for a new radio access technology to ensure transmission reliability. However, currently, there is no solution about how to determine a code rate in a network coding process.

In view of this, this application provides a solution for determining code rate information in a network coding process, so as to support application of the network coding technology. In this solution, a network coding code rate of a network coding layer can adapt to a channel quality state. In this way, data transmission reliability can be ensured, and a waste of spectrum resources caused by adding excessive redundancy can be avoided.

With reference to more accompanying drawings, the following describes in detail the technical solutions provided in this application.

FIG. 6 is a schematic flowchart of a communication method 600 according to an embodiment of this application. The method is described by using a transmit end 601 and a receive end 602. The transmit end and/or the receive end may be a terminal (for example, an XR terminal), or may be a chip, a chip system, a processor, or the like that supports a terminal in implementing the method. Alternatively, the transmit end and/or the receive end may be an access network device, or may be a chip, a chip system, a processor, or the like that supports an access network device in implementing the method. The transmit end 601 is an end that sends data that has undergone network coding processing, and the receive end 602 is an end that receives data that has undergone network coding processing. Correspondingly, the receive end 602 performs decoding processing corresponding to network coding performed on the received data.

As shown in FIG. 6, the method 600 in this embodiment may include S610 and S630.

S610: The receive end sends first information, where there is a first correspondence between the first information and first NC code rate information of an NC layer, and the NC layer is higher than a physical layer. Correspondingly, the transmit end receives the first information from the receive end.

A protocol layer having a network coding function or a decoding function corresponding to network coding is referred to as a network coding/decoding layer, and the network coding/decoding layer is referred to as a network coding (NC) layer for short in this application. The NC layer is a higher layer higher than the physical layer.

In this application, the first NC code rate information may indicate one or more of the following:

a ratio of a quantity of original data packets to a quantity of redundant packets corresponding to the original data packets;

a ratio of a quantity of original data packets to a total quantity of data packets, where the total quantity of data packets is a sum of the quantity of original data packets and a quantity of redundant packets corresponding to the original data packet;

a ratio of a quantity of redundant packets to a total quantity of data packets, where the total quantity of data packets is a sum of a quantity of corresponding original data packets for generating the redundant packets and the quantity of redundant packets;

a ratio of a quantity of original data packets newly participating in coding in a current coding window to a quantity of redundant packets corresponding to the current coding window;

a ratio of a quantity of original data packets newly participating in coding in a current coding window to a total quantity of data packets corresponding to the current coding window, where the total quantity of data packets corresponding to the current coding window is a sum of a quantity of original data packets and a quantity of redundant packets in the current coding window, or the total quantity of data packets corresponding to the current coding window is a sum of the quantity of original data packets newly participating in coding and the quantity of redundant packets in the current coding window; or

a ratio of a quantity of redundant packets in a current coding window to a total quantity of data packets corresponding to the current coding window, where the total quantity of data packets corresponding to the current coding window is a sum of a quantity of original data packets and the quantity of redundant packets in the current coding window, or the total quantity of data packets corresponding to the current coding window is a sum of a quantity of original data packets newly participating in coding and the quantity of redundant packets in the current coding window.

The ratio of the quantity of original data packets to the total quantity of data packets or the ratio of the quantity of original data packets newly participating in coding in the current coding window to the total quantity of data packets corresponding to the current coding window may be referred to as a code rate.

The receive end may indicate the first NC code rate information to the transmit end by using the first information that has the first correspondence with the first NC code rate information. Correspondingly, the transmit end can determine a quantity of coded packets or redundant packets generated by performing network coding processing on to-be-sent data.

The first correspondence is one of a plurality of one-to-one correspondences, a value of the first information is one of a plurality of candidate values of the first information, the first NC code rate information is one of a plurality of pieces of NC code rate information, and there are the plurality of one-to-one correspondences between the plurality of candidate values and the plurality of pieces of NC code rate information. In other words, different values of the first information indicate different NC code rate information. Each piece of NC code rate information may include one or more parameters related to an NC code rate.

Designs of the one or more parameters related to the NC code rate and the plurality of corresponding correspondences mentioned herein are specifically described in a subsequent embodiment.

Optionally, the receive end may determine the first information based on a first measurement result, that is, the first information is related to the first measurement result.

Specifically, the first measurement result may reflect a channel quality state of the NC layer, and the first measurement result may include one or more of the following:

a decoding state of the receive end that corresponds to network coding, where the decoding state indicates a success rate and/or a failure rate of decoding corresponding to a network coding packet or a network coding sliding window in a period of time, if all original packets in the network coding packet or the network coding sliding window are successfully decoded, the network coding packet or the network coding sliding window is successfully decoded; or if not all original packets in the network coding packet or the network coding sliding window are successfully decoded, the network coding packet or the network coding sliding window fails to be decoded; the success rate is a proportion of network coding packets that are successfully decoded in a period of time to all network coding packets, or a proportion of network coding sliding windows that are successfully decoded in a period of time to all network coding sliding windows; and the failure rate is a proportion of network coding packets that fail to be decoded in a period of time to all network coding packets, or a proportion of network coding sliding windows that fail to be decoded in a period of time to all network coding sliding windows;

a packet loss rate of the NC layer, where the packet loss rate of the NC layer indicates a ratio of a quantity of data packets at the NC layer that are unsuccessfully received in a period of time to a total quantity of data packets (including a redundant packet and an original data packet/system packet) at the NC layer, or indicates a ratio of a quantity of original data packets at the NC layer that are unsuccessfully received in a period of time to a total quantity of sent original data packets (that is, a total quantity of to-be-received data packets) at the NC layer;

a frame loss rate of the NC layer, where the frame loss rate of the NC layer indicates a ratio of a quantity of video frames that are unsuccessfully decoded at the NC layer in a period of time to a total quantity of video frames; or channel state information of the physical layer.

The channel state information of the physical layer may include one or more of a CQI, an SINR, RSRP, an RSSI, RSRQ, or the like.

Because the channel quality state of the NC layer is related to the channel state information of the physical layer, the corresponding first information may be obtained based on the measured channel state information of the physical layer. Based on measurement information of the physical layer, measurement overheads can be reduced. An accurate channel quality state of the NC layer may be obtained based on a statistical measurement result of a parameter that can reflect a channel quality state at the NC network coding layer, such as a decoding state of NC, the packet loss rate of the NC layer, or the frame loss rate of the NC layer, thereby accurately adjusting a code rate.

Further, for services with different reliability indicators, even if channel quality states are the same, requirements for a code rate are different. Therefore, the correspondence between the first information and the first NC code rate information is further related to a reliability indicator of a service. The reliability indicator of the service may include one or more of the following:

    a quality of service (QoS) requirement of the service;
    a mean opinion score (MOS);
    a target packet loss rate of the higher layer; or
    a target frame loss rate of the higher layer.

The reliability indicator of the service is used as a basis for determining the first information, so that channel quality levels can be adaptively divided for different service features, so as to adaptively adjust an NC code rate of a corresponding service, thereby improving system spectral efficiency. It may be understood that the reliability indicator of the service may further include another indicator, and details are not described herein.

In this application, the first information may be control information of the NC layer, or may be control information of the physical layer. A solution in which the first information is the control information of the NC and a solution in which the first information is the control information of the physical layer are separately described in detail in subsequent embodiments, and details are not described herein.

S630: The transmit end determines the first NC code rate information based on the first information and the first correspondence, where the first NC code rate information is used to determine a quantity of coded packets or redundant packets generated by performing NC processing on to-be-sent data by the NC layer, and the coded packets include a redundant packet and a system packet corresponding to an original data packet for generating the redundant packet.

As described above, the first correspondence may be one of a plurality of correspondences. Specifically, the plurality of correspondences may be predefined. For example, the correspondence is pre-stored at the transmit end and the receive end in a form of a table or a character string. The pre-stored correspondence may be pre-determined in a protocol. Alternatively, the correspondence may be pre-configured by the transmit end for the receive end, or may be sent by a party in a control state in data transmission to a party in a controlled state.

"Predefine" in this application may be understood as "define", "define in advance", "store", "pre-store", "pre-negotiate", "pre-configure", "solidify", or "pre-burn".

Optionally, the transmit end performs NC processing on the to-be-sent data based on the first NC code rate information to obtain coded packets.

Optionally, the transmit end sends one or more of the coded packets.

For a specific process of NC processing and sending the coded packet, refer to descriptions in FIG. 4a and FIG. 4b. Details are not described herein again.

Optionally, the method may further include S650 and S670.

S650: The receive end sends second information to the transmit end, where the second information indicates one or more of the following: a quantity of coded packets further required for correct decoding, a quantity of correctly received coded packets, or a success or failure of decoding corresponding to network coding, the second information is used to adjust the first NC code rate information to determine second NC code rate information, and the second NC code rate information is used to determine a quantity of coded packets or redundant packets generated by performing the network coding processing on the to-be-sent data by the higher layer. Correspondingly, the transmit end receives the second information.

In this case, the foregoing step of performing NC processing on the to-be-sent data based on the first NC code rate information to obtain a coded packet and/or sending the coded packet may be performed or may not be performed, and this may be specifically designed or determined based on a specific system design requirement.

S670: The transmit end performs NC processing on the to-be-sent data based on the second NC code rate information to obtain coded packets.

Optionally, the transmit end sends one or more of the coded packets.

For a specific process of NC processing and sending the coded packet, refer to descriptions in FIG. 4a and FIG. 4b. Details are not described herein again.

The second information is specific to a currently decoded coded packet, so that a feedback interval of the second information may be shorter and timelier. Therefore, the first NC code rate information determined based on the first information can be adjusted more finely, so as to determine a more accurate code rate, thereby further improving system spectral efficiency.

According to the method described in FIG. 6, the NC code rate information used for performing NC processing on the to-be-sent data may be related to the channel quality state of the NC layer, so that when the NC technology is applied, both system spectral efficiency and data transmission reliability can be considered.

In actual communication, two parties in communication are unnecessarily equal. One party may be a controlling party, and the other party may be a controlled party. In this application, downlink data is data transmitted by the controlling party to the controlled party in a receive end and a transmit end in data communication, and uplink data is data transmitted by the controlled party to the controlling party in the receive end and the transmit end in data communication. For example, for data communication between the access network device and the terminal, if the access network device is in a controlling state and the terminal is in a controlled state, data transmitted by the access network device to the terminal is downlink data, and data transmitted by the terminal to the access network device is uplink data. For another example, for data communication between a terminal 1 and a terminal 2, if the terminal 1 is in a controlling state and the terminal 2 is in a controlled state, data transmitted by the terminal 1 to the terminal 2 is downlink data, and data transmitted by the terminal 2 to the terminal 1 is uplink data.

In the method described in FIG. 6, whether the to-be-sent data is downlink data or uplink data is not distinguished. The following provides description by separately using examples in which the to-be-sent data is downlink data and uplink data.

When description is provided for the downlink data, the first information is first feedback information, the first NC code rate information is first downlink NC code rate information, and the second information is second feedback information.

When description is provided for the uplink data, the first information is first indication information, the first NC code rate information is first uplink NC code rate information, and the second information is second indication information.

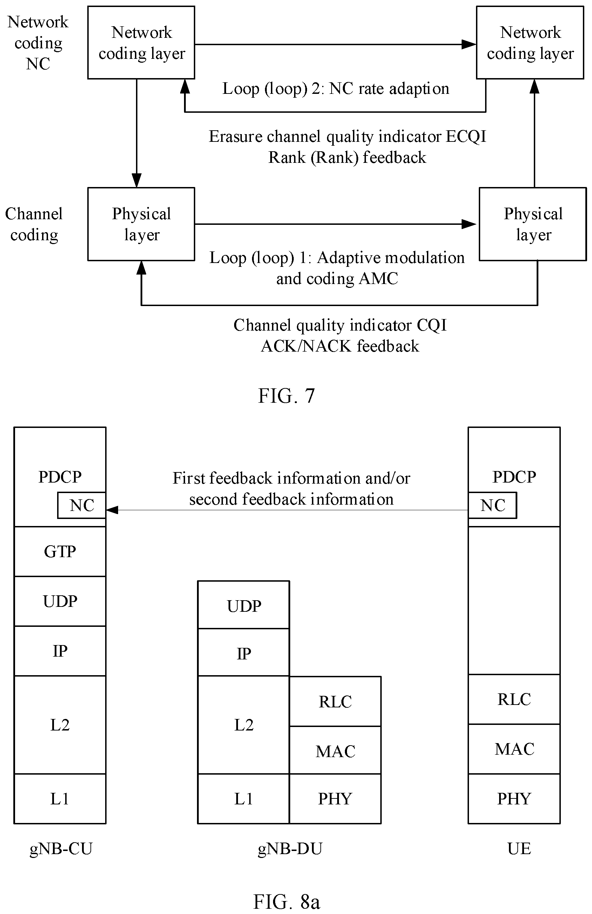

FIG. 7 is a schematic diagram of NC rate adaptation that is fed back by using an NC layer according to an embodiment of this application. Based on FIG. 7, the following describes a solution for determining an NC parameter such as NC code rate information of downlink data, provided in this application. In this solution, the first feedback information is carried in control information of an NC layer.

In this solution, feedback information is designed for a network coding layer. The feedback information can reflect a channel quality state. A transmit end can determine, based on the feedback information fed back by a receive end, an NC parameter, for example, information related to a downlink code rate, and perform network coding based on a determined downlink NC parameter, for example, a downlink NC code rate. In FIG. 7, optionally, in addition to that the NC layer performs rate adaptation of network coding based on feedback of the channel quality state of the NC layer, a physical layer of the transmit end performs AMC based on CQI feedback and ACK/NACK feedback of a physical layer of the receive end.

The technical solution in this embodiment is specifically described as follows.

A network coding layer of the receive end sends first feedback information to the transmit end. The first feedback information may be represented as channel quality indication information, which may reflect a quality state of an erasure channel at the network coding layer. For example, an ECQI may be used to represent a channel quality state sensed by the network coding layer.

The first feedback information may be carried by using the control information of the network coding layer, for example, carried by using a control PDU at the NC layer.

The first feedback information may have a feedback periodicity T, and a value of the feedback periodicity T may be predefined by a system, for example, predefined in a protocol; or may be indicated by the transmit end explicitly or implicitly. Alternatively, the first feedback information may be fed back after feedback scheduling is received from the transmit end, or after the receive end sends a feedback request. There may be another occasion for feeding back the first feedback information. This is not limited in this application.

The receive end may determine the first feedback information based on a first measurement result, and the first measurement result may reflect channel quality. The first measurement result may be obtained by measuring one or more measurement objects of a decoding state corresponding to network coding, a packet loss rate of the NC layer, a frame loss rate of the NC layer, or the like. Specifically, for the first measurement result, refer to the description in the embodiment shown in FIG. 6. Details are not described herein again.

How the receive end specifically determines the first feedback information based on the first measurement result may be determined by chip vendors based on a system requirement. For example, the first measurement result may fall within a numerical interval in a plurality of numerical intervals, and the plurality of numerical intervals are ranges of measurement results that represent different channel quality levels. Different first feedback information may indicate ranges measurement results that represent different channel quality levels. Optionally, some mapping tables, functions, or character strings are created to associate the first feedback information with ranges measurement results that represent different channel quality levels. For example, the following mapping table (Table 1) between a plurality of pieces of first feedback information (indicator indexes) and a plurality of ranges of packet loss rates (packet loss rates, PLRs) that represent different channel quality levels may be obtained based on simulation statistics.

Table 1

| Indicator index (Indicator Index) | Packet loss rate PLR interval |
|---|---|
| 0 | 95%<PLR≤100% |
| 1 | 90%<PLR≤ 95% |
| 2 | 85%<PLR≤90% |
| 3 | 80%<PLR≤85% |
| ... | ... |

It may be understood that, the foregoing values of the indexes of the first feedback information are merely examples, and the values of the indexes may alternatively be other values, provided that the values can indicate a plurality of ranges of packet loss rates (packet loss rates, PLRs) that represent different channel quality levels. The plurality of ranges of packet loss rates (packet loss rates, PLRs) that represent different channel quality levels may alternatively be divided in another manner. For example, a 10% difference instead of the foregoing 5% difference is used as a level.

The transmit end receives the first feedback information from the receive end, and determines first downlink NC code rate information based on the first feedback information. All related descriptions of the first NC code rate information in the description corresponding to FIG. 6 are applicable to the first downlink NC code rate information.

There is a first correspondence between the first feedback information and the first downlink NC code rate information. The first correspondence is one of a plurality of one-to-one correspondences, that is, one correspondence in a first correspondence set. A value of the first feedback information is one of a plurality of candidate values, the first downlink NC code rate information is one of a plurality of pieces of downlink NC code rate information, and there are the plurality of one-to-one correspondences between the plurality of candidate values of the first feedback information and the plurality of pieces of downlink NC code rate information. In other words, different values of the first feedback information indicate different downlink NC code rate information. Each piece of downlink NC code rate information may include one or more parameters related to a downlink NC code rate.

It may be understood that, the plurality of one-to-one correspondences may be predefined, for example, prestored at the transmit end and the receive end, and the correspondence may be predefined in a protocol. Alternatively, the plurality of one-to-one correspondences may be configured by the transmit end for the receive end, and a configuration manner may be explicit configuration or implicit configuration. This is not limited herein.

Optionally, the first correspondence set may be in a form of a table, a form of a function, or a form of a character string. This is not limited herein.

Further, for services with different reliability indicators, even if channel quality states are the same, requirements for a code rate are different. Therefore, the correspondence between the first feedback information and the first downlink NC code rate information is further related to a reliability indicator of a service. The description of the reliability indicator of the service in the description corresponding to FIG. 6 may be applied to the reliability indicator of the service in this embodiment. To be specific, reliability indicators (such as one or more of a QoS requirement, reliability, a MOS, a target packet loss rate, or a target frame loss rate) of different services may have different first correspondence sets. Values of downlink NC code rate information in different first correspondence sets may not be completely the same, or step granularities of downlink NC code rates may be different.

The following provides examples of a plurality of different first correspondence set. In the examples, the first correspondence set is presented in a form of a table. Table 2 and Table 3 are examples of a plurality of different first correspondence sets corresponding to different target packet loss rates, where the first downlink NC code rate information is a code rate value. Table 4 and Table 5 are examples of first correspondence sets without considering a reliability indicator of a service, where the first downlink NC code rate information in Table 4 includes a quantity of original data packets (that is, uncoded data packets) and a quantity of redundant packets, and the first downlink NC code rate information in Table 5 includes a quantity of original data packets and a total quantity of data packets.

Table 2 First correspondence set corresponding to a target packet loss rate 0.001

| Indicator index (Indicator Index) | NC code rate (code rate, CR) |
|---|---|
| 0 | 0.50 |
| 1 | 0.55 |
| 2 | 0.60 |

(continued)

| Indicator index (Indicator Index) | NC code rate (code rate, CR) |
| --- | --- |
| 3 | 0.65 |
| ... | ... |

**Table 3 First correspondence set corresponding to a target packet loss rate 0.0001**

| Indicator index (Indicator Index) | NC code rate (code rate, CR) |
| --- | --- |
| 0 | 0.3 |
| 1 | 0.4 |
| 2 | 0.5 |
| 3 | 0.6 |
| ... | ... |

**Table 4 First correspondence set**

| Indicator index (Indicator Index) | Quantity of uncoded data packets (Uncoded packets Number K) | Quantity of redundant packets (Redundant Packets Number R) |
| --- | --- | --- |
| 0 | 8 | 4 |
| 1 | 8 | 2 |
| 2 | 4 | 2 |
| 3 | 4 | 1 |
| ... | ... | ... |

**Table 5 First correspondence set**

| Indicator Index (Indicator Index) | Quantity of uncoded data packets (Uncoded packets Number K) | Total quantity of packets (Total Packets Number N) |
| --- | --- | --- |
| 0 | 8 | 12 |
| 1 | 8 | 10 |
| 2 | 4 | 6 |
| 3 | 4 | 5 |
| ... | ... | ... |

It may be understood that, values in the foregoing tables or the target indicators and values in the table titles are examples, or may be other values. This is not limited in this application. For example, a value of the first feedback information may alternatively be another value, provided that the value is consistent with a channel quality state to be represented by the first feedback information. To be specific, the value of the first feedback information in the foregoing example may be abstracted as a first value, a second value, or the like.

Optionally, the first correspondence set may alternatively include a part of the values enumerated above. In addition, the first correspondence set presented in the foregoing table may alternatively be represented in a form of a function or a character string.

Further, the first feedback information that represents a channel quality level (that is, a level of a channel quality state) and the first feedback information that has the first correspondence with the first downlink NC code rate information have a same value. In other words, one value of the first feedback information not only represents one channel quality level, but also corresponds to one piece of first downlink NC code rate information. It may be understood that another parameter, for example, a code rate index, may also be introduced. Different values of the code rate index correspond to different first downlink NC code rate information, and different values of the first feedback information are in a one-to-one correspondence with different values of the code rate index. In this way, a correspondence between the first downlink NC code rate information and the channel quality level may also be established by using the first feedback information.

Further, due to differences in channel quality, other coding-related parameters other than a code rate may alternatively be adaptively used. For example, when the channel quality is poor, it is suitable to use a large coding packet, a large convolution depth, or a large finite field size to perform network coding. The other coding-related parameters may include one or more of the following parameters:

    a size of a network coding packet;
    a coding depth, a convolution depth, or a sliding window size of network coding; or
    a size of a finite field.

Descriptions of the foregoing parameters are the same as descriptions of same terms in FIG. 6, and details are not described herein again.

Therefore, there may be further a correspondence between the first feedback information and another network coding-related parameter (NC parameter for short) other than the first downlink NC code rate information. In other words, the first correspondence may include a correspondence between the first feedback information and another coding-related parameter other than the first downlink NC code rate information. In the first correspondence set shown in Table 6, the first feedback information is specifically an indicator index in Table 6, and the first feedback information corresponds to an NC code rate and other NC parameters. The other NC parameters listed in Table 6 include a block size, an NC sliding window size, and a size of a GF field in a finite field. It may be understood that, the other NC parameters in the first correspondence may include only one or two of the following: a block size, an NC sliding window size, or a size of a GF field in a finite field. In addition, the value of the first feedback information in Table 6 ranges from 0 to N. It may be understood that the value may also be abstracted as a first value, a second value, ..., an $N^{th}$ value, or the like.

Table 6 First correspondence set

| Indicator Index (Indicator Index) | Other NC parameters (other NC parameters) | | | NC code rate (NC code rate) |
|---|---|---|---|---|
| | Block size | Window size | GF size | |
| 0 | $K_1$ | $W_1$ | $G_1$ | $CR_1$ |
| 1 | ... | ... | ... | $CR_2$ |
| 2 | $K_1$ | $W_1$ | $G_1$ | ... |
| ... | ... | ... | ... | ... |
| ... | $K_k$ | $W_k$ | $G_k$ | ... |
| ... | ... | ... | ... | ... |
| N | $K_k$ | $W_k$ | $G_k$ | $CR_n$ |

Further, because the first feedback information is obtained by measuring a channel or based on calculated statistics, and usually reflects channel quality obtained before a specific time interval, code rate selection based on the first feedback information may be considered as a relatively slow control or adjustment method. If there is still feedback information with a short delay from feedback of the receive end to receiving by the transmit end, that is, the receive end may further feed back second feedback information to the transmit end, and a delay of the feedback information is small or acceptable. For example, if a network coding function is implemented in a base station such as a gNB or in a DU (Distributed Unit, distributed unit) in a gNB, a small feedback delay may be implemented. The second feedback information sent by the network coding layer may also be used to determine a code rate. Therefore, code rate selection based on the second feedback information is a relatively fast control or adjustment manner. The second feedback information may be carried in NC-layer signaling.

The second feedback information may indicate a decoding state of network coding. For example, the second feedback information may be a rank (rank) indication, and is used to indicate one or more of the following: a quantity of coded data packets that are further required by the receive end for correct decoding, or indicate a quantity of coded data packets that are correctly received by the receive end, or indicate that decoding for network coding is correct or fails.

The transmit end may adjust a code rate or determine a code rate based on the second feedback information fed back by the receive end. For example, if the receive end feeds back that decoding for network coding is correct, that is, the rank indicates that the receive end correctly receives coded packets whose quantity is a quantity of original packets, the transmit end may increase a network coding code rate based on the feedback information; or if the receive end feeds back that decoding for network coding fails, the transmit end decreases a network coding code rate based on the feedback information. The network coding code rate may be increased or decreased by an integer multiple of a step, and the step may be semi-statically configured or dynamically configured, or may be autonomously determined by the transmit end. Alternatively, an adjustment amount for increasing or decreasing the network coding code rate may be a proportion of a current code rate, and the proportion may be semi-statically configured or dynamically configured, or may be autonomously determined by the transmit end. Specifically, for example, if the transmit end determines, based on the first feedback information, that a first code rate is 0.55, and receives the second feedback information, where the second feedback information indicates that the receive end correctly receives coded packets whose quantity is the quantity of original packets, the transmit end may increase, based on the second feedback information, the code rate by one step to 0.6 based on 0.55, or may increase an index corresponding to the first feedback information by 1. For example, an index fed back by the first feedback information is "index=1", a code rate determined based on the first feedback information and the second feedback information is a code rate corresponding to "index=1+1=2", and then it is determined, based on a correspondence between the first feedback information and a code rate, for example, Table 2, that the code rate (that is, a first downlink NC code rate) is 0.6. On the contrary, if the transmit end determines, based on the first feedback information, that a first code rate is 0.55, and receives the second feedback information, where the second feedback information indicates that the receive end correctly receives coded packets whose quantity is less than the quantity of original packets, the transmit end may decrease, based on the second feedback information, the code rate by one step to 0.5 based on 0.55, or may decrease an index corresponding to the first feedback information by 1. For example, an index fed back by the first feedback information is "index=1", a code rate determined based on the first feedback information and the second feedback information is a code rate corresponding to "index=1-1=0", and then it is determined, based on a correspondence between the first feedback information and a code rate (that is, a first downlink NC code rate), for example, Table 2, that the code rate is 0.5.

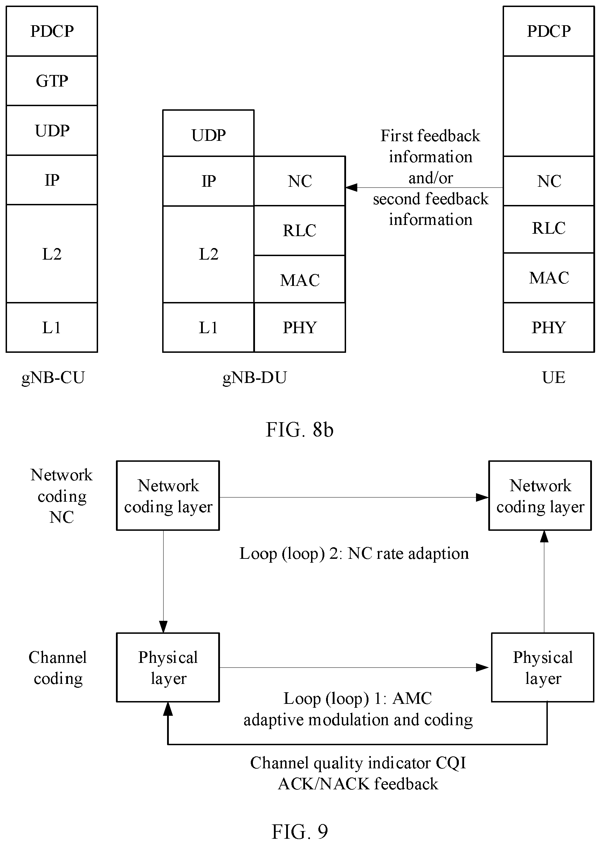

A protocol layer at which one or more of the first feedback information or the second feedback information is generated and sent depends on a protocol layer at which the network coding function is implemented. As shown in FIG. 8a, when a base station such as a gNB includes a CU and a DU, and the NC function is implemented at a PDCP layer, one or more of first feedback information or second feedback information is generated and sent at a PDCP layer of the receive end, namely, UE, and one or more of the first feedback information or the second feedback information is parsed at a PDCP layer of the CU of the transmit end, namely, the gNB. As shown in FIG. 8b, when a base station, such as a gNB includes a CU and a DU, and the NC function is implemented at an NC layer newly added between a PDCP layer and an RLC layer, one or more of first feedback information or second feedback information is generated and sent at an NC layer of the receive end, namely, UE, and one or more of the first feedback information or the second feedback information is parsed at the NC of the DU of the transmit end, namely, the gNB. FIG. 8a and FIG. 8b further show protocol layers for communication between the CU and the DU. L1 is a physical layer, L2 is a data link layer (data link layer), a GTP layer is a general packet radio service GPRS tunneling protocol (GPRS tunneling protocol) layer, a UDP layer is a user datagram protocol layer, and an IP layer is an Internet Protocol layer.

The transmit end determines the first downlink NC code rate information based on the first correspondence set and the first feedback information, or generates a redundant packet for a to-be-sent data packet and sends the redundant packet based on the first downlink NC code rate information determined based on the first feedback information and the second feedback information.

According to the network coding-based transmission method provided in this embodiment of this application, feedback is designed for a network coding layer, and a mapping relationship (that is, a correspondence) between the feedback and an NC code rate is designed. The receive end obtains feedback information based on but unnecessarily based on a channel quality state, and sends the feedback information to the transmit end. The transmit end may determine, based on the feedback information, one or more of network coding-related parameters including but not limited to an NC code rate, an NC packet size, an NC window size, and a finite field size, so as to adaptively control the NC related parameters based on the channel quality state. Further, the receive end may send the second feedback information to the transmit end, so that the transmit end further finely adjusts a code rate. According to the method provided in this embodiment, data transmission reliability can be ensured and system spectral efficiency can also be improved.

FIG. 9 is a schematic diagram of another solution for determining an NC parameter such as downlink NC code rate information of downlink data according to an embodiment of this application. Different from the solution shown in FIG. 7, in this solution, the first feedback information is carried in control information of a physical layer.

Specifically, information such as channel quality of a network coding layer may be mapped to a CQI of the physical layer, or a new type of physical-layer information may be added. A transmit end determines an NC-related parameter (NC parameter for short) based on first feedback information of the physical layer and a mapping relationship between the first feedback information and the NC-related parameter, where the NC-related parameter includes one or more of first downlink NC code rate information, an NC packet size, an NC window size, a finite field size, or the like, and then performs NC processing based on the determined NC-related parameter. As shown in FIG. 9, the network coding layer uses CQI feedback and ACK/NACK feedback of the physical layer to perform rate adaptation of NC processing, for example, NC rate adaptation. Optionally, in addition to NC rate adaptation, the transmit end and a receive end may further have AMC used for channel coding.

The technical solution in this embodiment is specifically described as follows.

A network coding layer of the receive end sends the first feedback information to the transmit end, where the first feedback information may be represented as channel quality indicator (CQI) information. In a possible manner, the first feedback information is a CQI index (index) generated by the physical layer, but the CQI index reflects a quality state of an erasure channel at the network coding layer, or the CQI index indicates code rate information of network coding. In another possible manner, the first feedback information is new indication information added to the physical layer. For example, the indication information is indication information added to CSI. The newly added physical-layer indication information reflects a quality state of an erasure channel at the network coding layer, or the newly added physical-layer indication information indicates code rate information of network coding.

Alternatively, the first feedback information may be obtained based on a first measurement result of the NC layer. Description of an occasion for sending the first feedback information, a first correspondence set between the first feedback information and first downlink NC code rate information, and second feedback information, and the like all may be similar to the description in the solution shown in FIG. 6 or FIG. 7. Details are not described herein again. A difference from the description in the solution shown in FIG. 7 lies in the following: In the solution shown in FIG. 7, the first feedback information is carried in the control information of the NC layer, but in this solution, the first feedback information is carried in the physical-layer information, for example, the CQI of the physical layer or the new indication information added to the physical layer is reused. In other words, the first correspondence sets in Table 2 to Table 6 can be applied to this solution when the indicator index in is replaced with a CQI index or a new indicator index added to the physical layer.

Optionally, as shown in FIG. 9, the second feedback information may also be physical-layer information, for example, ACK/NACK information, or ACK/NACK information of a CBG. However, the ACK/NACK information indicates a decoding state of network coding, to be specific, the NC layer of the receive end may obtain a corresponding NC decoding state and transfer the corresponding NC decoding state to the physical layer, and the physical layer generates corresponding ACK/NACK information.

Optionally, when the first feedback information is carried in a CQI field, the CQI field may indicate a channel quality state of the NC layer in a time division manner, that is, the CQI field is used as the first feedback information and indicates a channel quality state of the physical layer. For example, when an MCS is fixed at the physical layer, the CQI field may not indicate the channel quality state of the physical layer. In this case, the CQI field may indicate the channel quality state of the NC layer.

In a possible implementation, when the CQI field indicates the channel quality state of the NC layer, the CQI field may use one of the first correspondence sets shown in Table 2 to Table 6, and when the CQI field indicates the channel quality state of the physical layer, the CQI field may use an existing correspondence set. In other words, when the CQI field indicates the channel quality state of the NC layer, corresponding index information does not indicate the channel quality state of the physical layer, and when the CQI field indicates the channel quality state of the physical layer, corresponding index information does not indicate the channel quality state of the NC layer.

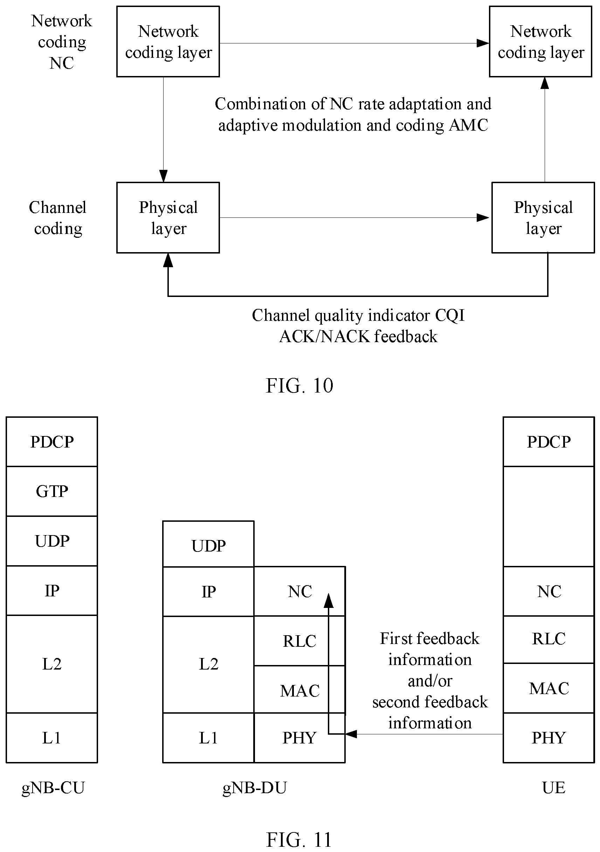

In another possible implementation, as shown in FIG. 10, when the CQI field indicates the channel quality state of the physical layer, corresponding index information also indicates the channel quality state of the NC layer, that is, NC rate adaptation is combined with AMC. When the CQI field indicates the channel quality state of the physical layer, there may be a correspondence between the CQI field and an MCS parameter. The MCS parameter may include one or more of an adjustment manner or information related to a physical-layer code rate. Optionally, the correspondence between the CQI field and the MCS parameter may further be related to a service reliability indicator of the physical layer, for example, a TBLER. In this way, the transmit end performs NC processing based on the determined NC parameter, for example, an NC code rate, and sends NC data. After the NC data arrives at the physical layer, a determined MCS is used for air interface transmission.

In still another possible implementation, a type of physical-layer indication information may be newly added. When the physical-layer indication information indicates the channel quality state of the physical layer, corresponding index information also indicates the channel quality state of the NC layer, that is, NC rate adaptation is combined with AMC. When the physical-layer indication information indicates the channel quality state of the physical layer, there may be a correspondence between the physical-layer indication information and an MCS parameter. The MCS parameter may include one or more of an adjustment manner or information related to a physical-layer code rate. Optionally, the correspondence between the physical-layer indication information and the MCS parameter may further be related to a service reliability indicator of the physical layer, for example, a TBLER.

In this case, a correspondence between the first feedback information and a parameter related to an MCS at the physical layer may be correspondingly introduced into Table 2 to Table 6. As shown in the following Table 7 to Table 10, Table 7 shows a plurality of first correspondences, that is, a first correspondence set, between a CQI index, a physical-layer modulation manner, physical-layer code rate information, and an NC code rate when the first feedback information is the CQI index and the service reliability indicator of the physical layer is TBLER=0.1; Table 8 shows a plurality of first correspondences, that is, a first correspondence set, between the first feedback information, a physical-layer adjustment manner, physical-layer code rate information, and an NC code rate when the first feedback information is an index of indication information newly added to the physical layer, that is, a newly added indicator index, and the service reliability indicator of the physical layer is TBLER=0.00001; Table 9 shows a plurality of first correspondences between, that is, a first correspondence set, between a CQI index, a physical-layer adjustment manner, physical-layer code rate information, an NC error rate, and other NC parameters when the first feedback information is the CQI index, where the other NC parameters include one or more of a block size, a window size, or a GF size; and Table 10 shows a plurality of first correspondences, that is, a first correspondence set, between the first feedback information, a physical-layer adjustment manner, physical-layer code rate information, a quantity of uncoded data packets in NC and a total quantity of data packets, and other NC parameters when the first feedback information is an index of new indication information added to the physical layer, that is, a newly added indicator index, where the quantity of uncoded data packets in NC is a quantity of original data packets in NC, and the other NC parameters include one or more of a block size, a window size, or a GF size.

It may be understood that Table 7 to Table 10 are merely some examples of the first correspondence set. The first correspondence set in this application may alternatively be a part of the first correspondence sets shown in these tables. For example, some rows or some columns constitute the first correspondence in this application. In addition, a specific value of the index may not be the examples provided in Table 7 to Table 10, or may be another value, for example, the value may be abstracted as a first value, a second value, or the like. This is not limited herein.

**Table 7 First correspondence set used for joint adaptation when TBLER=0.1**

| CQI index (CQI index) | Modulation (Modulation) | Physical-layer code rate (PHY code rate) R×[1024] | NC code rate (NC code rate) CR |
|---|---|---|---|
| 0 | Out of range (out of range) | Out of range (out of range) | Out of range (out of range) |
| 1 | QPSK | 78 | 0.55 |
| 2 | QPSK | 120 | 0.55 |
| 3 | QPSK | 193 | 0.55 |
| ... | ... | ... | ... |
| 15 | 64QAM | 948 | 0.95 |

**Table 8 First correspondence set used for joint adaptation when TBLER=0.00001**

| New indicator index added to the physical layer (New indicator index) | Modulation (Modulation) | Physical-layer code rate (PHY code rate) R×[1024] | NC code rate (NC code rate) CR |
|---|---|---|---|
| 0 | Out of range (out of range) | Out of range (out of range) | Out of range (out of range) |
| 1 | QPSK | 30 | 0.20 |
| 2 | QPSK | 50 | 0.20 |
| 3 | QPSK | 78 | 0.25 |
| ... | ... | ... | ... |
| 15 | 64QAM | 772 | 0.80 |

**Table 9 First correspondence set used for joint adaptation**

| CQI index (CQI index) | Modulation (Modulation) | Physical-layer code rate (PHY code rate) R× [1024] | Other NC parameters (other NC parameters) | | | NC code rate (NC code rate) |
|---|---|---|---|---|---|---|
| | | | Block size (Block size) | Window size (Window size) | GF size (GF size) | |
| 0 | $Q_1$ | $R_1$ | $K_1$ | $W_1$ | $G_1$ | $CR_1$ |
| 1 | $Q_1$ | $R_2$ | ... | ... | ... | $CR_2$ |
| 2 | $Q_1$ | $R_3$ | $K_1$ | $W_1$ | $G_1$ | ... |
| ... | ... | ... | ... | ... | ... | ... |
| ... | ... | ... | $K_k$ | $W_k$ | $G_k$ | ... |
| ... | ... | ... | ... | ... | ... | ... |
| N | $Q_m$ | $R_o$ | $K_k$ | $W_k$ | $G_k$ | $CR_n$ |

**Table 10 First correspondence set used for joint adaptation**

| New indicator index added to the physical layer (New indicator index) | Modulation (Modulation) | Physical-layer code rate (PHY code rate) R×[1024] | Other NC parameters (other NC parameters) | | | Quantity of uncoded data packets (Uncoded packets Number K) | Total quantity of packets (Total Packets Number N) |
|---|---|---|---|---|---|---|---|
| | | | Block size (Block size) | Window (Window) size | GF size (GF size) | | |
| 0 | $Q_1$ | $R_1$ | $K_1$ | $W_1$ | $G_1$ | $S_1$ | $N_1$ |
| 1 | $Q_1$ | $R_2$ | ... | ... | ... | $S_1$ | $N_2$ |
| 2 | $Q_1$ | $R_3$ | $K_1$ | $W_1$ | $G_1$ | ... | ... |
| ... | ... | ... | ... | ... | ... | | ... |
| ... | ... | ... | $K_k$ | $W_k$ | $G_k$ | $S_k$ | ... |
| ... | ... | ... | ... | ... | ... | ... | ... |
| N | $Q_m$ | $R_o$ | $K_k$ | $W_k$ | $G_k$ | $S_k$ | $N_n$ |

Further, as shown in FIG. 11, the second feedback information may be physical-layer ACK/NACK information, or specifically, ACK/NACK information of a CBG. The ACK/NACK information may indicate whether a TB or a CBG is correctly decoded, or may indicate a decoding state of network coding. For example, the second feedback information indicates one or more of a rank value, a quantity of coded data packets that are required by the receive end for correct decoding, a quantity of coded data packets that are correctly received by the receive end, or a success or failure of decoding for network coding. The transmit end may adjust or determine an MCS and a network coding code rate based on the second feedback information fed back by the receive end. For example, if the receive end feeds back an ACK and decoding for network coding is correct, the transmit end may increase an MCS level and the network coding code rate based on the feedback message; or if the receive end feeds back a NACK and decoding for network coding fails, the transmit end decreases the MCS level and the network coding code rate based on the feedback message. The network coding code rate may be increased or decreased by an integer multiple of a step, and the step may be semi-statically configured or may be autonomously determined by the transmit end. Alternatively, an adjustment amount for increasing or decreasing the network coding code rate may be a proportion of a current code rate, and the proportion may be semi-statically configured or may be autonomously determined by the transmit end.

For example, an NC function is implemented on a DU of a base station such as gNB, and both first feedback information and second feedback information are physical-layer information. FIG. 11 is a schematic diagram of a protocol layer in this embodiment. The receive end, namely, UE, sends one or more of the first feedback information or the second feedback information at the physical layer. The transmit end, namely, the gNB-DU, receives and obtains one or more of the first feedback information or the second feedback information at the physical layer, and sends one or more of the first feedback information or the second feedback information to the NC layer, to determine an NC-related parameter at the NC layer.

In this embodiment, a mapping relationship between a first downlink NC code rate and physical-layer feedback information, that is, one or more of the first feedback information or the second feedback information carried in physical-layer signaling, is designed. For example, existing physical-layer information such as a CQI is used, or a new type of indication information or a new type of physical-layer indication information is added to the existing physical-layer information to carry the first feedback information, to reflect a channel quality state of the NC layer or indicate an NC-related parameter of the NC layer, such as code rate information; or an existing ACK/NACK message may be used to indicate a decoding state of network coding, that is, the ACK/NACK message is reused for the second feedback information. In this way, the transmit end can determine the NC-related parameter not limiting to the NC code rate based on the physical-layer feedback information, to adaptively control the network coding code rate based on the channel quality state. In this way, data transmission reliability can be ensured and system spectral efficiency can also be improved. Further, the CQI or an index of the newly added indication information may also indicate both a parameter of the NC layer and an MCS parameter of the physical layer. The ACK/NACK information may also indicate both an ACK/NACK of the physical layer and a decoding state. In this way, joint feedback information such as CQI feedback and ACK/NACK feedback of the physical layer and network coding layer is used, so that not only rate adaptation of the physical layer can be performed, but also the rate adaptation of the network coding data can be performed.

The methods in FIG. 7 to FIG. 11 are all solutions for determining an NC parameter of downlink data provided in this application. The following describes a solution for an NC parameter of uplink data. The description corresponding to FIG. 6 may also be applied to this solution, provided that the first information described in FIG. 6 is replaced with first indication information, the first NC code rate information is replaced with first uplink NC code rate information, and the second information is replaced with second indication information. It may be understood that, FIG. 7 to FIG. 11 are corresponding designs for the solution for determining the NC parameter of the downlink data. However, for a design for implementing a solution for determining an NC parameter of data, for example, an occasion for sending the first indication information, the first measurement result related to the first indication information, that signaling carrying the first indication information may be NC layer signaling or physical layer signaling, and that signaling carrying the second indication information may also be NC layer signaling or physical layer signaling, refer to corresponding descriptions of the first feedback information, the first measurement result, and the second feedback information in the solution for determining the NC parameter of the downlink data. Details are not described herein again.

A difference between the solution for determining the NC parameter of the uplink data and the solution for determining the NC parameter of the downlink data lies in the following: Because a control party of the uplink data is the receive end of the uplink data, the first indication information sent by the receive end may indicate only the NC parameter in terms of physical meaning, and the transmit end of the uplink data receives the first indication information, that is, performs NC processing by using the NC parameter corresponding to the first indication information.

Due to reciprocity between uplink and downlink, a first correspondence set between the first feedback information and a first downlink NC parameter may be the same as a second correspondence set between the first indication information and a first uplink NC parameter. To be specific, in the solutions shown in FIG. 7 to FIG. 11, Table 2 to Table 10 may be applied to the solution for determining the NC parameter of the uplink data when the first feedback information in the first correspondence set shown in Table 2 to Table 10 is replaced with (or understood as) the first indication information.

Certainly, the second correspondence set used for the uplink NC parameter may alternatively be predefined based on a system requirement, for example, pre-agreed in a protocol. The second correspondence set may be different from the first correspondence set. Specifically, Table 12 shows a second correspondence set used for joint adaptation of an MCS and NC. The target code rate is an uplink physical-layer channel coding code rate.

**Table 12 Second correspondence set used for joint adaptation of an MCS and NC**

| First indication information index (Index) | Modulation order (Modulation Order Qm) | Target code rate (Target code rate) $R \times [1024]$ | Spectral efficiency (Spectral efficiency) | NC code rate (code rate, CR) |
|---|---|---|---|---|
| 0 | 2 | 120 | 0.2344 | 0.1 |

(continued)

| First indication information index (Index) | Modulation order (Modulation Order Qm) | Target code rate (Target code rate) R×[1024] | Spectral efficiency (Spectral efficiency) | NC code rate (code rate, CR) |
|---|---|---|---|---|
| 1 | 2 | 157 | 0.3066 | 0.2 |
| 2 | 2 | 193 | 0.3770 | 0.25 |
| 3 | 2 | 251 | 0.4902 | 0.30 |
| ... | ... | ... | ... | ... |
| 31 | 6 | Reserved (reserved) | Reserved (reserved) | 0.95 |

According to the method for determining an NC parameter of uplink data provided in this embodiment, indication information is designed for a network coding layer, and a mapping relationship between the indication information and a network coding code rate is designed. The receive end determines, based on a second measurement result of channel quality, network coding-related parameters including but not limited to a network coding code rate, so as to adaptively control the network coding code rate based on a channel quality state. The receive end may further finely adjust the code rate based on a decoding state of network coding, and indicates the code rate to the transmit end. Therefore, the network coding code rate is adaptively adjusted, so that data transmission reliability of uplink transmission can be ensured and system spectral efficiency can also be improved.

The foregoing content describes in detail the methods provided in this application. To better implement the foregoing solutions in embodiments of this application, embodiments of this application further provide corresponding apparatuses or devices.

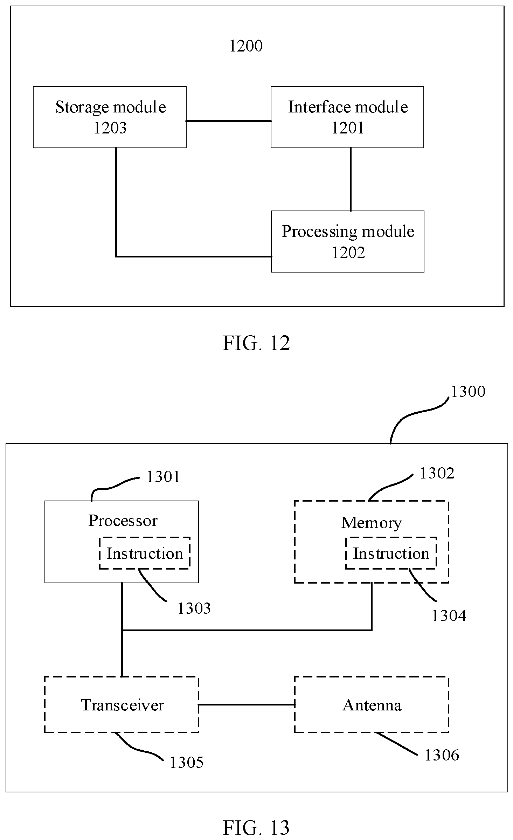

In embodiments of this application, the transmit end and the receive end may be divided into functional modules based on the foregoing method examples. For example, each functional module may be obtained through division for each corresponding function, or two or more functions may be integrated into one processing module. The integrated module may be implemented in a form of hardware, or may be implemented in a form of a software functional module. It should be noted that, in embodiments of this application, module division is an example, and is merely logical function division. In actual implementation, there may be another division manner. The following describes in detail the communication apparatuses in embodiments of this application with reference to FIG. 12 to FIG. 14. The apparatus may be the transmit end and/or the receive end in the foregoing method examples. For example, the apparatus may be a first apparatus, where the first apparatus is a transmit end of downlink data and/or a receive end of uplink data; or the apparatus may be a second apparatus, where the second apparatus is a receive end of downlink data and/or a transmit end of uplink data. Optionally, the first apparatus is an access network device or a chip in an access network device, and the second apparatus is a terminal device or a chip in a terminal device; or the first apparatus is a first access network device or a chip in a first access network device, and the second apparatus is a second access network device or a chip in a second access network device; or the first apparatus is a first terminal device or a chip in a first terminal device, and the second apparatus is a second terminal device or a chip in a second terminal device.

As shown in FIG. 12, an embodiment of this application provides an apparatus 1200. The apparatus may be a terminal, an access network device, a server, or a centralized controller, or may be a component (for example, an integrated circuit or a chip) in a terminal, an access network device, a server, or a centralized controller. Alternatively, the apparatus may be another communication module configured to implement the methods in the method embodiments of this application. The apparatus 1200 may include a processing module 1202 (also referred to as a processing unit). Optionally, the apparatus may further include an interface module 1201 (or referred to as a transceiver unit or a transceiver module) and a storage module 1203 (or referred to as a storage unit). The interface module 1201 is configured to communicate with another device. The interface module 1201 may be, for example, a transceiver module or an input/output module.

In a possible design, one or more modules in FIG. 12 may be implemented by one or more processors, may be implemented by one or more processors and memories, may be implemented by one or more processors and transceivers, or may be implemented by one or more processors, memories, and transceivers. This is not limited in this embodiment of this application. The processor, the memory, and the transceiver may be disposed separately or may be integrated.

The apparatus has a function of implementing a function of a receive end of uplink data and/or a transmit end of downlink data described in embodiments of this application. For example, the apparatus includes a module, a unit, or a means (means) correspondingly used by the receive end of uplink data and/or the transmit end of downlink data to perform the steps related to the receive end of uplink data and/or the transmit end of downlink data described in embodiments of this application. The function, the unit, or the means (means) may be implemented by software or hardware, may be implemented by hardware executing corresponding software, or may be implemented by combining software and hardware. For details, refer to the corresponding descriptions in the foregoing corresponding method embodiments. Alternatively, the apparatus has a function of implementing a transmit end of uplink data and/or a receive end of downlink data described in embodiments of this application. For example, the apparatus includes a module, a unit, or a means (means) correspondingly used by the transmit end of uplink data and/or the receive end of downlink data to perform the steps related to the transmit end of uplink data and/or the receive end of downlink data described in embodiments of this application. The function, the unit, or the means (means) may be implemented by software or hardware, may be implemented by hardware executing corresponding software, or may be implemented by combining software and hardware. For details, refer to the corresponding descriptions in the foregoing corresponding method embodiments.

Optionally, the modules in the apparatus 1200 in this embodiment of this application may be configured to perform behavior of the transmit end or the receive end in the method described in FIG. 6 in embodiments of this application.

For example, when the apparatus 1200 is configured to perform behavior of the receive end, the interface module 1201 is configured to perform S610 of sending first information, and optionally, may be further configured to perform S650 of sending second information; and the processing module 1202 may be configured to determine the first information, and optionally, further determine the second information. The storage module 1203 may be configured to store the first correspondence set and/or the second correspondence set in the foregoing methods.

For another example, when the apparatus 1200 is configured to perform behavior of the transmit end, the interface module 1201 is configured to perform S610 of receiving first information, and optionally, may be further configured to perform S650 of receiving second information; and the processing module 1202 may be configured to perform S630 of determining first NC code rate information, and optionally, further determine second NC code rate information. The processing module 1202 may be further configured to perform NC processing based on the first NC code rate information and/or the second NC code rate information. The interface module 1201 may be further configured to send a coded packet generated through the NC processing. The storage module 1203 may be configured to store the first correspondence set and/or the second correspondence set in the foregoing methods.

It may be understood that, in some scenarios, some optional features in this embodiment of this application may be independently implemented without depending on another feature, for example, a solution on which the optional features are currently based, to resolve a corresponding technical problem and achieve corresponding effect. Alternatively, in some scenarios, the optional features may be combined with another feature based on a requirement. Correspondingly, the apparatus provided in this embodiment of this application may also correspondingly implement these features or functions. Details are not described herein.

FIG. 13 is a schematic diagram of a structure of an apparatus. The apparatus 1300 may be an access network device, a terminal device, a server, or a centralized controller, or may be a chip, a chip system, a processor, or the like that supports an access network device, a terminal device, a server, or a centralized controller in implementing the foregoing methods. The apparatus may be configured to implement the methods described in the foregoing method embodiments. For details, refer to the descriptions in the foregoing method embodiments.

The apparatus 1300 may include one or more processors 1301. The processor 1301 may also be referred to as a processing unit, and may implement a control function. The processor 1301 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data in the software program.

In an optional design, the processor 1301 may also store an instruction and/or data 1303, and the instruction and/or data 1303 may be run on the processor, so that the apparatus 1300 performs the methods described in the foregoing method embodiments.

In another optional design, the processor 1301 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data; or the transceiver circuit, the interface, or the interface circuit may be configured to transmit or transfer a signal.

In still another possible design, the apparatus 1300 may include a circuit, and the circuit may implement the sending, receiving, or communication function in the foregoing method embodiments.

Optionally, the apparatus 1300 may include one or more memories 1302. The memory stores an instruction 1304, and the instructions may be run on the processor, so that the apparatus 1300 performs the methods described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 1300 may further include a transceiver 1305 and/or an antenna 1306. The processor 1301 may be referred to as a processing unit, and control the apparatus 1300. The transceiver 1305 may be referred to as a transceiver unit, a transceiver circuit, a transceiver apparatus, a transceiver module, or the like, and is configured to implement a receiving/transmitting function.

Optionally, the apparatus 1300 in this embodiment of this application may be configured to perform the method described in FIG. 6 in embodiments of this application.

In a possible implementation, the processing module in FIG. 12 may be implemented by the processor in FIG. 13, the storage module in FIG. 12 may be implemented by the memory and/or the processor in FIG. 13, and the interface module in FIG. 12 may be implemented by the transceiver, the transceiver and the antenna, or the processor in FIG. 13.

The processor and the transceiver described in this application may be implemented on an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may also be manufactured by using various IC technologies, for example, a complementary metal-oxide-semiconductor (complementary metal-oxide-semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon-germanium (SiGe), and gallium arsenide (GaAs).

The apparatus described in the foregoing embodiment may be an access network device or a terminal device. However, a range of the apparatus described in this application is not limited thereto, and a structure of the apparatus may not be limited by FIG. 13. The apparatus may be an independent device, or may be a part of a larger device. For example, the apparatus may be the following:

(1) an independent integrated circuit IC, a chip, or a chip system or subsystem;
(2) a set including one or more ICs, where optionally, the IC set may also include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, an in-vehicle device, an access network device, a cloud device, an artificial intelligence device, a machine device, a home device, a medical device, an industrial device, or the like; or
(6) others.

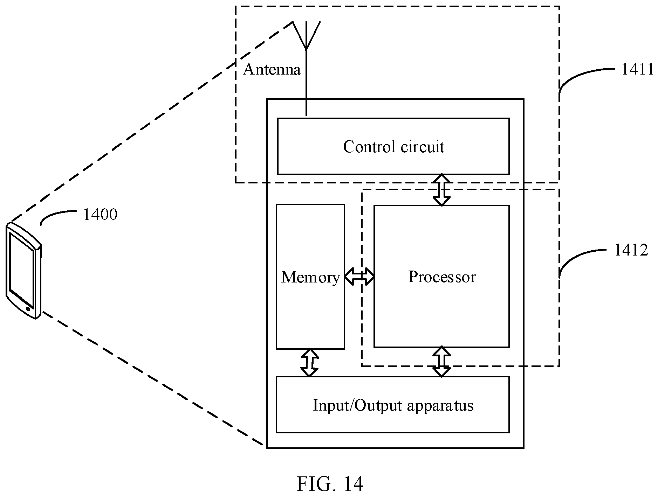

FIG. 14 is a schematic diagram of a structure of a terminal device. The terminal device is applicable to the scenario shown in FIG. 1. For ease of description, FIG. 14 shows only main components of the terminal device. The terminal device may serve as a transmit end of uplink data and/or a receive end of downlink data described above when communicating with an access network device, or may serve as a transmit end of downlink data and/or a receive end of uplink data described above when communicating with another terminal device. This is not limited herein. For a function of the terminal device, refer to the description in the foregoing method embodiments or apparatus embodiments. Details are not described herein again. As shown in FIG. 14, the terminal device 1400 includes a processor, a memory, a control circuit, an antenna, and an input/output apparatus. The processor is mainly configured to: process a communication protocol and communication data, control an entire terminal, execute a software program, and process data in the software program. The memory is mainly configured to store a software program and data. A radio frequency circuit is mainly configured to: perform conversion between a baseband signal and a radio frequency signal, and process a radio frequency signal. The antenna is mainly configured to receive and transmit a radio frequency signal in a form of an electromagnetic wave. The input/output apparatus, such as a touchscreen, a display, or a keyboard, is mainly configured to receive data input by a user and output data to the user.

After the terminal device is powered on, the processor may read a software program in a storage unit, parse and execute instructions in the software program, and process data in the software program. When data needs to be sent wirelessly, the processor performs baseband processing on the to-be-sent data, and then outputs a baseband signal to the radio frequency circuit. The radio frequency circuit processes the baseband signal to obtain a radio frequency signal, and sends the radio frequency signal to the outside in a form of an electromagnetic wave by using the antenna. When data is sent to the terminal device, the radio frequency circuit receives a radio frequency signal by using the antenna, further converts the radio frequency signal into a baseband signal, and outputs the baseband signal to the processor. The processor converts the baseband signal into data, and processes the data.

For ease of description, FIG. 14 shows only one memory and one processor. In an actual terminal device, there may be a plurality of processors and memories. The memory may also be referred to as a storage medium, a storage device, or the like. This is not limited in this embodiment of this application.

In an optional implementation, the processor may include a baseband processor and a central processing unit. The baseband processor is mainly configured to process a communication protocol and communication data. The central processing unit is mainly configured to: control the entire terminal device, execute a software program, and process data in the software program. The processor in FIG. 14 integrates functions of the baseband processor and the central processing unit. A person skilled in the art may understand that the baseband processor and the central processing unit may alternatively be processors independent of each other, and are interconnected by using a technology such as a bus. A person skilled in the art may understand that, the terminal device may include a plurality of baseband processors to adapt to different network standards, and the terminal device may include a plurality of central processing units to enhance a processing capability of the terminal device, and the components of the terminal device may be connected by using various buses. The baseband processor may also be expressed as a baseband processing circuit or a baseband processing chip. The central processing unit may also be expressed as a central processing circuit or a central processing chip. The function of processing the communication protocol and the communication data may be built in the processor, or may be stored in the storage unit in a form of a software program, and the processor executes the software program to implement a baseband processing function.

In an example, the antenna and the control circuit that have a receiving/transmitting function may be considered as a transceiver unit 1411 of the terminal device 1400, and the processor having a processing function may be considered as a processing unit 1412 of the terminal device 1400. As shown in FIG. 14, the terminal device 1400 includes the transceiver unit 1411 and the processing unit 1412. The transceiver unit may also be referred to as a transceiver, a transceiver apparatus, or the like. Optionally, a component that is in the transceiver unit 1411 and that is configured to implement a receiving function may be considered as a receiving unit, and a component that is in the transceiver unit 1411 and that is configured to implement a sending function may be considered as a sending unit. In other words, the transceiver unit 1411 includes the receiving unit and the sending unit. For example, the receiving unit may also be referred to as a receiver, a receiving circuit, or the like, and the sending unit may be referred to as a transmitter, a transmitting circuit, or the like. Optionally, the receiving unit and the sending unit may be one integrated unit, or may be a plurality of units independent of each other. The receiving unit and the sending unit may be at one geographical location, or may be distributed at a plurality of geographical locations.

A person skilled in the art may further understand that various illustrative logical blocks (illustrative logical blocks) and steps (steps) that are listed in embodiments of this application may be implemented by electronic hardware, computer software, or a combination thereof. Whether the function is implemented by using hardware or software depends on a particular application and a design requirement of the entire system. A person skilled in the art may use various methods to implement the function for a corresponding application, but this implementation should not be understood as beyond the protection scope of embodiments of this application.

It may be understood that, the processor in embodiments of this application may be an integrated circuit chip, and has a signal processing capability. In an implementation process, the steps in the foregoing method embodiments may be implemented by using a hardware integrated logic circuit in the processor or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component.

The solutions described in this application may be implemented in various manners. For example, these technologies may be implemented by hardware, software, or a combination of software and hardware. For hardware implementation, a processing unit configured to execute these technologies at a communication apparatus may be implemented in one or more general-purpose processors, a DSP, a digital signal processor, an ASIC, a programmable logic device, an FPGA or another programmable logic apparatus, a discrete gate or transistor logic, a discrete hardware component, or any combination thereof. The general-purpose processor may be a microprocessor, or the processor may be implemented by using a combination of computing apparatuses, for example, implemented by a digital signal processor and a microprocessor, a plurality of microprocessors, one or more microprocessors combined with a digital signal processor core, or any other similar configuration.

It may be understood that, the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. As an example description rather than a limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories in the systems and methods described in this specification are intended to include but not limit to these memories and any memory of another proper type.

This application further provides a computer-readable medium. The computer-readable medium stores a computer program, and when the computer program is executed by a computer, a function of a corresponding apparatus, such as a transmit end or a receive end, in any one of the foregoing method embodiments is implemented.

This application further provides a computer program product. When the computer program product is executed by a computer, a function of a corresponding apparatus, such as a transmit end or a receive end, in any one of the foregoing method embodiments is implemented.

The solutions described in the foregoing embodiments may be entirely or partially implemented by software, hardware, firmware, or any combination thereof. When software is used for implementation, the embodiments may be entirely or partially implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any available medium accessible by a computer, or a data storage device, such as a server or a data center, that includes one or more available media. The available medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

It may be understood that, "embodiments" mentioned in the entire specification means that particular features, structures, or characteristics related to the embodiments are included in at least one embodiment of this application. Therefore, embodiments in the entire specification do not necessarily refer to a same embodiment. In addition, these particular features, structures, or characteristics may be combined in one or more embodiments in any proper manner. It may be understood that, in various embodiments of this application, sequence numbers of the foregoing processes do not mean execution sequences. The execution sequences of the processes should be determined by functions and internal logic of the processes, and do not constitute any limitation on implementation processes of embodiments of this application.

It may be understood that, in this application, both "when ..." and "if" mean that an apparatus performs corresponding processing in an objective situation, and are not intended to limit time. The terms do not mean that the apparatus is required to have a determining action during implementation, and do not mean any other limitation.

"Simultaneously" in this application may be understood as being at a same time point, or may be understood as being in a time period, or may be understood as being in a same periodicity. This may be specifically understood with reference to context.

A person skilled in the art may understand that, a specific value of a number (which may also be referred to as an index), a specific value of a quantity, and a location in this application are merely used as examples, are not unique representation forms, and are not used to limit the scope of embodiments of this application. Various numerical numbers such as "first" and "second" in this application are merely used for differentiation for ease of description, and are not used to limit the scope of embodiments of this application.

In this application, an element represented in a singular form is intended to represent "one or more", but does not represent "one and only one", unless otherwise specified. In this application, unless otherwise specified, "at least one" is intended to represent "one or more", and "a plurality of" is intended to represent "two or more".

In addition, the terms "system" and "network" in this specification may be used interchangeably in this specification. The term "and/or" in this specification describes only an association relationship between associated objects and represents that three relationships may exist. For example, "A and/or B" may represent the following three cases: only A exists, both A and B exist, and only B exists. A may be singular or plural, and B may be singular or plural. The character "/" usually indicates that associated objects are in an "or" relationship. In some cases, the character "/" may also be understood as an "and/or" relationship, and may be specifically understood with reference to context.

The term "at least one of ..." or "at least one of ..." in this specification indicates all of or any combination of listed items. For example, "at least one of A, B, and C" may indicate the following six cases: Only A exists, only B exists, only C exists, A and B coexist, B and C coexist, and A, B, and C coexist. A may be singular or plural, B may be singular or plural, and C may be singular or plural.

It should be understood that in embodiments of this application, "B corresponding to A" represents that B is associated with A, or B may be determined based on A. However, it should be further understood that determining B based on A does not mean that B is determined based only on A. B may alternatively be determined based on A and/or other information.

The correspondences shown in the tables in this application may be configured or may be predefined. Values of the information in the tables are merely examples, and other values may be configured. This is not limited in this application. When a correspondence between the information and the parameters is configured, not all the correspondences shown in the tables need to be configured. For example, in the tables in this application, correspondences shown in some rows may alternatively not be configured. For another example, proper variations and adjustments such as splitting and combination may be performed based on the foregoing tables. Names of the parameters shown in titles of the foregoing tables may alternatively be other names that can be understood by the communication apparatus, and values or representation manners of the parameters may alternatively be other values or representation manners that can be understood by the communication apparatus. During implementation of the foregoing tables, another data structure, such as an array, a queue, a container, a stack, a linear table, a pointer, a linked list, a tree, a graph, a structure, a class, a pile, or a hash table, may alternatively be used. "Predefine" in this application may be understood as "define", "define in advance", "store", "pre-store", "pre-negotiate", "pre-configure", "solidify", or "pre-burn".

A person of ordinary skill in the art may understand that, the units and the algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A skilled person may use different methods to implement the described functions for each particular application, but this implementation should not be considered as beyond the scope of this application.

A person of ordinary skill in the art may understand that, for convenient and brief description, for specific working processes of the system, apparatus, and unit described above, refer to corresponding processes in the foregoing method embodiments. Details are not described herein again.

It may be understood that the system, apparatus, and method described in this application may alternatively be implemented in another manner. For example, the apparatus embodiments described above are merely examples. For example, division of the units is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the function is implemented in a form of a software functional unit and sold or used as an independent product, the function may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, an access network device, or the like) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Mutual reference may be made between same or similar parts in embodiments of this application. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship of the technical features. The implementations of this application described above do constitute a limitation on the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1. A communication method, comprising:

   receiving first feedback information from a receive end, wherein the first feedback information indicates a channel quality state of a higher layer, the higher layer is higher than a physical layer, there is a first correspondence between the first feedback information and first downlink network coding NC code rate information, and the higher layer has an NC function; and
   determining the first downlink NC code rate information based on the first feedback information and the first correspondence, wherein the first downlink NC code rate information is used to determine a quantity of coded packets or redundant packets generated by performing network coding processing on to-be-sent downlink data by the higher layer, and the coded packets comprise a redundant packet and a system packet corresponding to an original data packet for generating the redundant packet.

2. A communication method, comprising:

   determining first feedback information, wherein the first feedback information indicates a channel quality state of a higher layer, the higher layer is higher than a physical layer, and the higher layer has a network coding function; and
   sending the first feedback information to a transmit end, wherein the first feedback information is used to determine first downlink network coding NC code rate information of the transmit end, there is a first correspondence between the first feedback information and the first downlink NC code rate information, the first downlink NC code rate information is used by the higher layer of the transmit end to determine a quantity of coded packets or redundant packets generated by performing network coding processing on to-be-sent downlink data, and the coded packets comprise a redundant packet and a system packet corresponding to an original data packet for generating the redundant packet.

3. The method according to claim 1 or 2, wherein the first feedback information is related to a first measurement result; and
   the first measurement result comprises one or more of the following:

   a decoding state of the receive end that corresponds to network coding, wherein the decoding state indicates a success rate and/or a failure rate of decoding corresponding to network coding in a period of time;
   a packet loss rate of the higher layer, wherein the packet loss rate of the higher layer indicates a ratio of a quantity of data packets at the higher layer that are unsuccessfully received in a period of time to a total quantity of data packets at the higher layer, or indicates a ratio of a quantity of original data packets at the higher layer that are unsuccessfully received in a period of time to a total quantity of original data packets at the higher layer;
   a frame loss rate of the higher layer, wherein the frame loss rate of the higher layer indicates a ratio of a quantity of video frames that are unsuccessfully decoded at the higher layer in a period of time to a total quantity of video frames; or
   channel state information of the physical layer.

4. The method according to claim 3, wherein the first feedback information is further related to a reliability indicator of a service, and the reliability indicator of the service comprises one or more of the following:

   a quality of service QoS requirement of the service;
   a mean opinion score MOS;
   a target packet loss rate of the higher layer; or
   a target frame loss rate of the higher layer.

5. The method according to any one of claims 1 to 4, wherein the first downlink NC code rate information indicates one or more of the following:

   a ratio of a quantity of original data packets to a quantity of redundant packets corresponding to the original data packets;
   a ratio of a quantity of original data packets to a total quantity of data packets, wherein the total quantity of data packets is a sum of the quantity of original data packets and a quantity of redundant packets corresponding to the original data packet;

a ratio of a quantity of original data packets newly participating in coding in a current coding window to a quantity of redundant packets corresponding to the current coding window; or

a ratio of a quantity of original data packets newly participating in coding in a current coding window to a total quantity of data packets corresponding to the current coding window, wherein the total quantity of data packets corresponding to the current coding window is a sum of a quantity of original data packets and a quantity of redundant packets in the current coding window.

6. The method according to any one of claims 1 to 5, wherein the first correspondence is one of a plurality of correspondences, the first feedback information is one of a plurality of indexes, the first downlink NC code rate information is one of a plurality of pieces of downlink NC code rate information, there are the plurality of correspondences between the plurality of indexes and the plurality of pieces of downlink NC code rate information, one of the plurality of indexes corresponds to one or more of the plurality of pieces of downlink NC code rate information, and one of the plurality of pieces of downlink NC code rate information comprises one or more parameters related to a downlink NC code rate.

7. The method according to any one of claims 1 to 6, wherein the first feedback information is further used to determine one or more of the following parameters:

   a size of a network coding packet;
   a coding depth, a convolution depth, or a sliding window size of network coding; or
   a size of a finite field.

8. The method according to any one of claims 1 to 7, wherein the first feedback information is control information of the higher layer.

9. The method according to any one of claims 1 to 7, wherein the first feedback information is control information of the physical layer.

10. The method according to claim 9, wherein the first feedback information further indicates one or more of first downlink modulation scheme information and first downlink physical-layer code rate information of the physical layer, the first downlink modulation scheme information is used by the physical layer to determine a modulation scheme of the to-be-sent downlink data, and the first downlink physical-layer code rate information is used by the physical layer to determine a physical-layer code rate of the to-be-sent downlink data.

11. The method according to claim 9 or 10, wherein the first feedback information is further related to a target block error rate TBLER of the physical layer.

12. The method according to any one of claims 1 or 3 to 11, further comprising:

   receiving second feedback information from the receive end, wherein the second feedback information indicates one or more of the following: a quantity of coded packets that are further required by the receive end for correct decoding, a quantity of coded packets that are correctly received by the receive end, or a success or a failure of decoding performed by the receive end corresponding to network coding; and
   adjusting the first downlink NC code rate information based on the second feedback information to determine second downlink NC code rate information, wherein the second downlink NC code rate information is used to determine a quantity of coded packets or redundant packets generated by performing the network coding processing on the to-be-sent downlink data by the higher layer.

13. The method according to any one of claims 2 to 11, further comprising:
   sending second feedback information to the transmit end, wherein the second feedback information indicates one or more of the following: a quantity of coded packets further required for correct decoding, a quantity of correctly received coded packets, or a success or a failure of decoding corresponding to network coding, the second feedback information is used to adjust the first downlink NC code rate information to determine the second downlink NC code rate information, and the second downlink NC code rate information is used to determine a quantity of coded packets or redundant packets generated by performing the network coding processing on the to-be-sent downlink data by the higher layer.

14. The method according to claim 12 or 13, wherein the second feedback information is the control information of the higher layer.

**15.** The method according to claim 12 or 13, wherein the second feedback information is the control information of the physical layer.

**16.** A communication apparatus, comprising a unit or a module configured to perform the method according to any one of claims 1 to 15.

**17.** A communication apparatus, comprising:

one or more processors and one or more memories, wherein
the one or more memories are configured to store a computer program, and the one or more processors are configured to execute the computer program stored in the one or more memories, so that the communication apparatus performs the method according to any one of claims 1, 3 to 12, or 14 and 15, or performs the method according to any one of claims 2 to 11, or 13 to 15.

**18.** A readable storage medium, configured to store a program, wherein the program is executed by one or more processors, so that an apparatus comprising the one or more processors performs the method according to any one of claims 1, 3 to 12, or 14 and 15, or performs the method according to any one of claims 2 to 11, or 13 to 15.

FIG. 1

FIG. 2

FIG. 3

FIG. 4a

FIG. 4b

$Y^{(K+R)\times 1}$       $A^{(K+R)\times K}$       $X^{K\times 1}$

=       •

Coded data       Coding coefficient matrix       Original data

FIG. 5

| Transmit end | | Receive end |

S610: First information having a first correspondence
with first NC code rate information

S630: The transmit end determines the first NC code rate
information based on the first information and the first
correspondence

S650: Second information (fast feedback/indication)

S670: Perform NC processing on to-be-sent data based on
second NC code rate information to obtain coded packets

FIG. 6

Network
coding
NC

Network
coding layer

Network
coding layer

Loop (loop) 2: NC rate adaption

Erasure channel quality indicator ECQI
Rank (Rank) feedback

Channel
coding

Physical
layer

Physical
layer

Loop (loop) 1: Adaptive modulation
and coding AMC

Channel quality indicator CQI
ACK/NACK feedback

FIG. 7

PDCP

NC

GTP

UDP

IP

L2

L1

First feedback information and/or
second feedback information

UDP

IP

L2

L1

RLC

MAC

PHY

PDCP

NC

RLC

MAC

PHY

gNB-CU

gNB-DU

UE

FIG. 8a

| PDCP | | | | | PDCP |
|------|--|--|--|--|------|
| GTP | | | | | |
| UDP | UDP | | | | |
| IP | IP | NC | First feedback information and/or second feedback information | NC |
| L2 | L2 | RLC | | RLC |
| | | MAC | | MAC |
| L1 | L1 | PHY | | PHY |

gNB-CU                    gNB-DU                              UE

FIG. 8b

Network coding NC — Network coding layer → Network coding layer

Loop (loop) 2: NC rate adaption

Channel coding — Physical layer → Physical layer

Loop (loop) 1: AMC adaptive modulation and coding

Channel quality indicator CQI
ACK/NACK feedback

FIG. 9

Network
coding
NC

| Network coding layer | → | Network coding layer |

Combination of NC rate adaptation and
adaptive modulation and coding AMC

Channel
coding

| Physical layer | → | Physical layer |

Channel quality indicator CQI
ACK/NACK feedback

FIG. 10

| PDCP |
| GTP |
| UDP |
| IP |
| L2 |
| L1 |

| UDP | |
| IP | NC |
| L2 | RLC |
| | MAC |
| L1 | PHY |

First feedback
information
and/or
second feedback
information

| PDCP |
| |
| NC |
| RLC |
| MAC |
| PHY |

gNB-CU                    gNB-DU                         UE

FIG. 11

1200

Storage module
1203

Interface module
1201

Processing module
1202

FIG. 12

1300

1301

Processor

Instruction

1303

1302

Memory

Instruction

1304

Transceiver

1305

Antenna

1306

FIG. 13

Antenna

Control circuit

1411

1400

Memory

Processor

1412

Input/Output apparatus

FIG. 14

# EP 4 354 769 A1

<table>
<tr><td colspan="2">INTERNATIONAL SEARCH REPORT</td><td>International application No.<br><br>**PCT/CN2022/098468**</td></tr>
</table>

| **A.** | **CLASSIFICATION OF SUBJECT MATTER** |
|---|---|
| | H04L 1/00(2006.01)i |

According to International Patent Classification (IPC) or to both national classification and IPC

| **B.** | **FIELDS SEARCHED** |
|---|---|

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT; 3GPP: 接收, 发送, 反馈, 索引, 丢包率, 质量, 高层, 媒体接入控制层, 分组数据汇聚层, 无线链路控制层, 网络编码, 喷泉码, 码率, 冗余, 包, 个数, 数量, 比, 下行, feedback, index, loss, rate, code, QoS, quantity, CQI, BLER, PDCP, BAP, MAC, RLC, L2, layer, high, redundancy, number, amount, adjust, change, corresponding, network coding, downlink, DL

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | US 2021328711 A1 (QUALCOMM INC.) 21 October 2021 (2021-10-21)<br>description, paragraphs [0006]-[0264], and figure 5 | 1-18 |
| X | CN 105450357 A (ZTE CORP.) 30 March 2016 (2016-03-30)<br>description, paragraphs [0004]-[0159], and figure 1 | 1-18 |
| X | CN 102209079 A (PEKING UNIVERSITY SHENZHEN GRADUATE SCHOOL et al.) 05 October 2011 (2011-10-05)<br>description, paragraphs [0004]-[0087], and figure 1 | 1-18 |
| A | CN 101039260 A (FUJITSU LTD.) 19 September 2007 (2007-09-19)<br>entire document | 1-18 |
| A | CN 109150395 A (HUAWEI TECHNOLOGIES CO., LTD.) 04 January 2019 (2019-01-04)<br>entire document | 1-18 |
| A | WO 2021081311 A1 (QUALCOMM INC.) 29 April 2021 (2021-04-29)<br>entire document | 1-18 |
| A | US 2017230310 A1 (HITACHI LTD.) 10 August 2017 (2017-08-10)<br>entire document | 1-18 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 August 2022** | **30 August 2022** |
| Name and mailing address of the ISA/CN | Authorized officer |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/098468**

| Patent document cited in search report | | | Publication date (day/month/year) | Patent family member(s) | | | Publication date (day/month/year) |
|---|---|---|---|---|---|---|---|
| US | 2021328711 | A1 | 21 October 2021 | WO | 2021211622 | A1 | 21 October 2021 |
| CN | 105450357 | A | 30 March 2016 | WO | 2016045332 | A1 | 31 March 2016 |
| CN | 102209079 | A | 05 October 2011 | US | 2014112352 | A1 | 24 April 2014 |
| | | | | WO | 2012174763 | A1 | 27 December 2012 |
| CN | 101039260 | A | 19 September 2007 | US | 2007260850 | A1 | 08 November 2007 |
| | | | | KR | 100752910 | B1 | 28 August 2007 |
| | | | | JP | 2007251737 | A | 27 September 2007 |
| CN | 109150395 | A | 04 January 2019 | CN | 109150396 | A | 04 January 2019 |
| | | | | WO | 2019141195 | A1 | 25 July 2019 |
| WO | 2021081311 | A1 | 29 April 2021 | KR | 20220088856 | A | 28 June 2022 |
| | | | | TW | 202126076 | A | 01 July 2021 |
| | | | | US | 2021127296 | A1 | 29 April 2021 |
| US | 2017230310 | A1 | 10 August 2017 | WO | 2016092686 | A1 | 16 June 2016 |
| | | | | BR | 112017009940 | A2 | 09 January 2018 |
| | | | | AU | 2014413360 | A1 | 29 June 2017 |
| | | | | JP | WO2016092686 | A1 | 27 July 2017 |

Form PCT/ISA/210 (patent family annex) (January 2015)